# EUROPEAN PATENT APPLICATION

(11) **EP 4 797 026 A1**
(43) Date of publication of application: **26.08.2026**
(21) Application number: 26159435.2
(22) Date of filing: 18.02.2026
(51) Int. Cl.: G05D 1/229, A01B 69/04, G05D 1/648, G05D 1/672

(54) **ROUTE GENERATION METHOD, ROUTE GENERATION PROGRAM, AND ROUTE GENERATION SYSTEM**

(30) Priority: 25.02.2025 JP 2025027857
(71) Applicant: Yanmar Holdings Co., Ltd., Osaka (JP)
(72) Inventor: NISHINO, Mitsuya, Okayama-shi (JP); NISHIBEPPU, Shinya, Okayama-shi (JP); NISHII, Yasuto, Okayama-shi (JP); TAKAHASHI, Mamoru, Okayama-shi (JP)
(74) Representative: Sekiguchi, Kazuya

(57) **Abstract**

[Problem] There are provided a route generation method, a route generation program, and a route generation system that can easily generate a target route on which a work vehicle is caused to automatically travel in a non-rectangular work area.

[Solution] In an automatic traveling system 1, a generation processing unit 213 sets one of a first route generation mode of generating the target route based on a first reference line that serves as a reference at a time of generating the target route, and a second route generation mode of generating the target route based on the first reference line and a second reference line having a different shape or azimuth from a shape or an azimuth of the first reference line.

## Description

### TECHNICAL FIELD

The present invention relates to a technique of generating a target route on which a work vehicle is caused to automatically travel.

### BACKGROUND ART

Conventionally, there has been known a work vehicle that automatically travels along a preset target route in a field. For example, the work vehicle automatically travels along a target route set to each of an inner circumferential area of a center portion of the field and an outer circumferential area (headland area) of an outer circumferential portion of the field (see, for example, JP 7049033 B2).

### PRIOR ART DOCUMENT

### PATENT DOCUMENT

Patent Document 1: JP 7049033 B2

### SUMMARY OF INVENTION

### TECHNICAL PROBLEM

By the way, a work target field is not limited to a rectangular field, and includes a non-rectangular field such as a field whose part of an outer shape (such as a corner part) has an oblique shape or a field whose part of an outer shape has a curved shape. In a case of such a non-rectangular field, it is difficult to generate a target route on which the work vehicle is caused to automatically travel.

An object of the present invention is to provide a route generation method, a route generation program, and a route generation system that can easily generate a target route on which a work vehicle is caused to automatically travel in a non-rectangular work area.

### SOLUTION TO PROBLEM

A route generation method according to the present invention is a route generation method for generating a target route on which a work vehicle is caused to automatically travel in a work area. The route generation method includes setting one of a first route generation mode of generating the target route based on a first reference line that serves as a reference at a time of generating the target route, and a second route generation mode of generating the target route based on the first reference line and a second reference line having a different shape or azimuth from a shape or an azimuth of the first reference line.

A route generation program according to the present invention is a route generation program that generates a target route on which a work vehicle is caused to automatically travel in a work area. The route generation program causes one or a plurality of processors to set one of a first route generation mode of generating the target route based on a first reference line that serves as a reference at a time of generating the target route, and a second route generation mode of generating the target route based on the first reference line and a second reference line having a different shape or azimuth from a shape or an azimuth of the first reference line.

A route generation system according to the present invention is a route generation system that generates a target route on which a work vehicle is caused to automatically travel in a work area. The route generation system sets one of a first route generation mode of generating the target route based on a first reference line that serves as a reference at a time of generating the target route, and a second route generation mode of generating the target route based on the first reference line and a second reference line having a different shape or azimuth from a shape or an azimuth of the first reference line.

### ADVANTAGEOUS EFFECTS OF INVENTION

According to the present invention, it is possible to provide a route generation method, a route generation program, and a route generation system that can easily generate a target route on which a work vehicle is caused to automatically travel in a non-rectangular work area.

### BRIEF DESCRIPTION OF DRAWINGS

Fig. 1 is a block diagram illustrating a configuration of an automatic traveling system according to an embodiment of the present invention;
Fig. 2 is an external view illustrating a configuration of a work vehicle according to the embodiment of the present invention;
Fig. 3 is a view illustrating an example of a field registration method according to the embodiment of the present invention;
Fig. 4 is a view illustrating an example of a field registration method according to the embodiment of the present invention;
Fig. 5 is a view illustrating an example of a menu screen displayed on an operation terminal according to the embodiment of the present invention;
Fig. 6 is a view illustrating an example of a method for setting a first reference line and a second reference line according to the embodiment of the present invention;
Fig. 7A is a view illustrating an example of a method for converting a curve included in the second reference line into a straight line according to the embodiment of the present invention;
Fig. 7B is a view illustrating an example of the method for converting the curve included in the second reference line into the straight line according to the embodiment of the present invention;
Fig. 7C is a view illustrating an example of the method for converting the curve included in the second reference line into the straight line according to the embodiment of the present invention;
Fig. 8 is a view illustrating a problem that occurs when a target route is generated by duplicating the entire first reference line;
Fig. 9 is a view illustrating an example of a target route generation method according to the embodiment of the present invention;
Fig. 10A is a view for describing the target route generation method according to the embodiment of the present invention;
Fig. 10B is a view for describing the target route generation method according to the embodiment of the present invention;
Fig. 10C is a view for describing the target route generation method according to the embodiment of the present invention;
Fig. 11 is a view illustrating an example of a target route generated by a generation method (first route generation mode) according to the embodiment of the present invention;
Fig. 12 is a view illustrating an example of the target route generation method according to the embodiment of the present invention;
Fig. 13 is a view illustrating an example of the target route generation method according to the embodiment of the present invention;
Fig. 14 is a view illustrating an example of a target route generated by a generation method (second route generation mode (non-overlap mode)) according to the embodiment of the present invention;
Fig. 15 is a view illustrating an example of a target route generated by the generation method (second route generation mode (overlap mode)) according to the embodiment of the present invention;
Fig. 16 is a view illustrating an example of a reference line selection screen displayed on the operation terminal according to the embodiment of the present invention;
Fig. 17 is a view illustrating an example of a work machine selection screen displayed on the operation terminal according to the embodiment of the present invention;
Fig. 18 is a view illustrating an example of a route creation selection screen displayed on the operation terminal according to the embodiment of the present invention;
Fig. 19 is a view illustrating an example of the route creation selection screen displayed on the operation terminal according to the embodiment of the present invention;
Fig. 20A is a view illustrating an example of the route creation selection screen displayed on the operation terminal according to the embodiment of the present invention;
Fig. 20B is a view illustrating an example of the route creation selection screen displayed on the operation terminal according to the embodiment of the present invention;
Fig. 21 is a flowchart illustrating an example of a procedure of route generation processing executed by the automatic traveling system according to the embodiment of the present invention;
Fig. 22 is a view illustrating an example of the target route generation method according to another embodiment of the present invention;
Fig. 23 is a view illustrating another example of a first reference line setting method according to the embodiment of the present invention;
Fig. 24A is a view illustrating an example of the target route generation method according to the other embodiment of the present invention;
Fig. 24B is a view illustrating an example of the target route generation method according to the other embodiment of the present invention;
Fig. 25A is a view illustrating an example of the target route generation method according to the other embodiment of the present invention;
Fig. 25B is a view illustrating an example of the target route generation method according to the other embodiment of the present invention;
Fig. 26A is a view illustrating an example of the target route generation method according to the other embodiment of the present invention;
Fig. 26B is a view illustrating an example of the target route generation method according to the other embodiment of the present invention;
Fig. 26C is a view illustrating an example of the target route generation method according to the other embodiment of the present invention;
Fig. 27A is a view illustrating an example of a work area registration screen displayed on the operation terminal according to the embodiment of the present invention;
Fig. 27B is a view illustrating an example of the work area registration screen displayed on the operation terminal according to the embodiment of the present invention;
Fig. 28A is a view illustrating an example of a method for determining measurement points of end points of a reference curve according to the embodiment of the present invention;
Fig. 28B is a view illustrating an example of the method for determining the measurement points of the end points of the reference curve according to the embodiment of the present invention;
Fig. 28C is a view illustrating an example of the method for determining the measurement points of the end points of the reference curve according to the embodiment of the present invention;
Fig. 28D is a view illustrating an example of the method for determining the measurement points of the end points of the reference curve according to the embodiment of the present invention;
Fig. 29 is a view illustrating an example of the method for determining the measurement points of the end points of the reference curve according to the embodiment of the present invention;
Fig. 30 is a view illustrating an example of the work area registration screen displayed on the operation terminal according to the embodiment of the present invention;
Fig. 31A is a view illustrating another example of the first reference line generation method according to the embodiment of the present invention;
Fig. 31B is a view illustrating the other example of the first reference line generation method according to the embodiment of the present invention;
Fig. 32 is a view illustrating an example of a first reference line extension method according to the embodiment of the present invention;
Fig. 33 is a view illustrating another example of a work route generation method according to the embodiment of the present invention;
Fig. 34A is a view illustrating a state where the work route according to the embodiment of the present invention is extended;
Fig. 34B is a view illustrating an example of a work route display method according to the embodiment of the present invention;
Fig. 34C is a view illustrating an example of the work route display method according to the embodiment of the present invention;
Fig. 35A is a view illustrating an example of the method for displaying a work route in a headland area according to the embodiment of the present invention;
Fig. 35B is a view illustrating an example of the method for displaying the work route in the headland area according to the embodiment of the present invention; and
Fig. 35C is a view illustrating an example of the method for displaying the work route in the headland area according to the embodiment of the present invention.

### DESCRIPTION OF EMBODIMENTS

The following embodiments are embodied examples of the present invention, and do not limit the technical scope of the present invention.

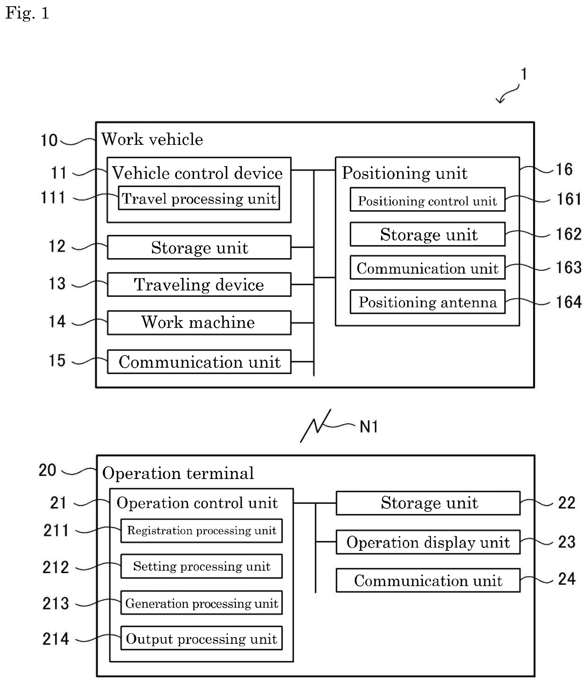

As illustrated in Fig. 1, an automatic traveling system 1 according to the embodiment of the present invention includes a work vehicle 10 and an operation terminal 20. The work vehicle 10 and the operation terminal 20 can communicate via a communication network N1. For example, the work vehicle 10 and the operation terminal 20 can communicate via a mobile telephone network, a packet network, or a wireless LAN. The automatic traveling system 1 is an example of a route generation system according to the present invention.

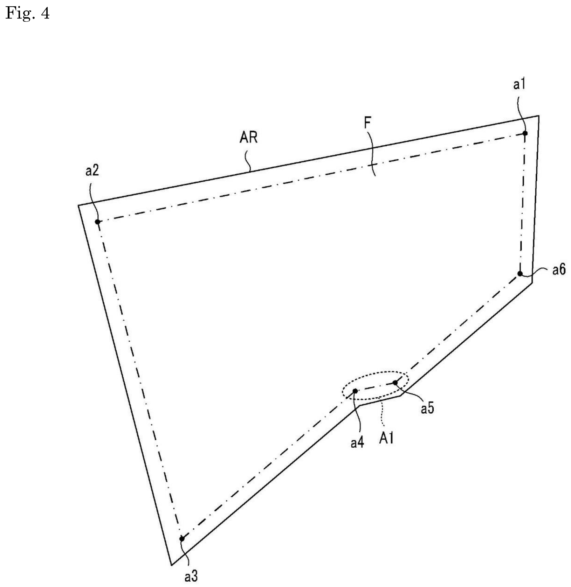

The present embodiment will be described citing a case where the work vehicle 10 is a tractor as an example. Note that, in another embodiment, the work vehicle 10 may be a combine harvester, a rice transplanter, a construction machine, a snowplow, or the like. The work vehicle 10 employs a configuration that can automatically travel in a field F (see Fig. 4) along a preset target route.

For example, a worker (operator) registers the work target field F and sets the target route on which the work vehicle 10 is caused to automatically travel for the field F. The work vehicle 10 automatically travels along the target route set in advance for the field F based on position information of a current position of the work vehicle 10 acquired by a positioning unit 16. Furthermore, the work vehicle 10 performs predetermined work while automatically traveling in the field F.

The operation terminal 20 is a portable terminal capable of remotely controlling the work vehicle 10, and includes, for example, a tablet terminal, a notebook personal computer, a smartphone, or the like. The worker can perform setting operations regarding various types of setting items on the operation terminal 20. For example, the worker operates the operation terminal 20 to register the field F or set the target route to the registered field F. Furthermore, the operation terminal 20 displays information such as a work status and a traveling status of the work vehicle 10 during automatic traveling. The worker can grasp the work status and the traveling status on the operation terminal 20.

By the way, a work target field is not limited to a rectangular field, and includes a non-rectangular field such as a field whose part of an outer shape (such as a corner part) has an oblique shape or a field whose part of an outer shape has a curved shape. In a case of such a non-rectangular field, it is difficult to generate a target route on which the work vehicle 10 is caused to automatically travel. By contrast with this, the automatic traveling system 1 according to the present embodiment employs a configuration that can easily generate a target route on which the work vehicle is caused to automatically travel in a non-rectangular work area as described below.

### [Work Vehicle 10]

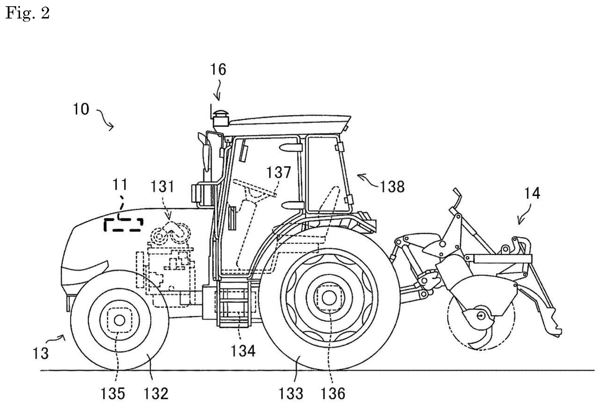

As illustrated in Figs. 1 and 2, the work vehicle 10 includes a vehicle control device 11, a storage unit 12, a traveling device 13, a work machine 14, a communication unit 15, the positioning unit 16, and the like. The vehicle control device 11 is electrically connected to the storage unit 12, the traveling device 13, the work machine 14, the positioning unit 16, and the like. Note that the vehicle control device 11 and the positioning unit 16 may be capable of wireless communication.

The communication unit 15 is a communication interface for connecting the work vehicle 10 to the communication network N1 by wire or wirelessly, and executing data communication according to a predetermined communication protocol with an external device (the operation terminal 20 or the like) via the communication network N1.

The storage unit 12 is a non-volatile storage unit such as a Hard Disk Drive (HDD) or a Solid State Drive (SSD) that stores various types of information. The storage unit 12 stores a control program for causing the vehicle control device 11 to execute various types of processing. For example, the control program is non-temporarily recorded in a computer-readable recording medium such as a CD or a DVD, and is read by a predetermined reading device (not illustrated) and stored in the storage unit 12. Note that the control program may be downloaded from a server (not illustrated) to the work vehicle 10 via the communication network N1 and stored in the storage unit 12. Furthermore, the storage unit 12 stores data of a target route generated in the operation terminal 20, and the like.

The traveling device 13 is a drive unit that causes the work vehicle 10 to travel. As illustrated in Fig. 2, the traveling device 13 includes an engine 131, front wheels 132, rear wheels 133, a transmission 134, a front axle 135, a rear axle 136, a steering wheel 137, and the like. Note that the front wheels 132 and the rear wheels 133 are provided on the left and right of the work vehicle 10. Furthermore, the traveling device 13 is not limited to a wheel type including the front wheel 132 and the rear wheel 133, and may be a crawler type including crawlers provided on the left and right of the work vehicle 10.

The engine 131 is a drive source such as a diesel engine or a gasoline engine driven using fuel supplied to an unillustrated fuel tank. The traveling device 13 may include an electric motor as a drive source together with the engine 131 or instead of the engine 131. Note that an unillustrated generator is connected to the engine 131, and electric power is supplied from the generator to electric components such as the vehicle control device 11 and the positioning unit 16 provided to the work vehicle 10, a battery, and the like. Note that the battery is charged with electric power supplied from the generator. Moreover, electric components such as the vehicle control device 11 and the positioning unit 16 provided in the work vehicle 10 can be driven with electric power supplied from the battery even after the engine 131 is stopped.

A driving force of the engine 131 is transmitted to the front wheels 132 via the transmission 134 and the front axle 135, and is transmitted to the rear wheels 133 via the transmission 134 and the rear axle 136. Furthermore, a driving force of the engine 131 is also transmitted to the work machine 14 via a PTO shaft (not illustrated). When the work vehicle 10 automatically travels, the traveling device 13 performs a traveling operation in accordance with a command from the vehicle control device 11. Furthermore, the traveling device 13 causes the work vehicle 10 to decelerate and travel or stop in accordance with a command from the vehicle control device 11.

The work machine 14 is, for example, a tiller, a mower, a plow, a fertilizing machine, a sprayer (chemical sprayer), a puddling device, or a seeding machine, and is detachable from the work vehicle 10. Thus, the work vehicle 10 can perform various types of work by using any of the work machines 14. Fig. 2 illustrates a case where the work machine 14 is a tiller. For example, the work machine 14 is mounted at the back of the work vehicle 10. The work vehicle 10 performs tilling work by traveling in the field F with the work machine 14 attached to the back.

The work machine 14 may be supported in the work vehicle 10 so as to be able to be lifted and lowered by an unillustrated lifting and lowering mechanism. The vehicle control device 11 can lift and lower the work machine 14 by controlling the lifting and lowering mechanism. For example, the vehicle control device 11 lowers the work machine 14 when the work vehicle 10 travels straightforward in a forward direction in the field F, and lifts the work machine 14 when the work vehicle 10 travels straightforward in a backward direction in the field F or turns and travels. Furthermore, when the work vehicle 10 performs work on a turning route, the vehicle control device 11 lowers the work machine 14 when the work vehicle 10 turns and travels on the turning route. When acquiring a work stop instruction, the vehicle control device 11 outputs a work stop command to the work machine 14. For example, the vehicle control device 11 acquires a stop instruction from the operation terminal 20 when the worker performs a stop instruction operation on the operation terminal 20. When acquiring the work stop instruction, the vehicle control device 11 stops driving of the PTO shaft and stops work of the work machine 14.

The steering wheel 137 is an operation unit to be operated by the worker or the vehicle control device 11. For example, in the traveling device 13, an angle of the front wheel 132 is changed by an unillustrated hydraulic power steering mechanism or the like in accordance with an operation of the steering wheel 137 by the vehicle control device 11, and a travel direction of the work vehicle 10 is changed.

Furthermore, in addition to the steering wheel 137, the traveling device 13 includes an unillustrated shift lever, accelerator, brake, and the like to be operated by the vehicle control device 11. Furthermore, in the traveling device 13, a gear of the transmission 134 is switched to a forward gear, a back gear, or the like in accordance with an operation of the shift lever by the vehicle control device 11, and a traveling mode of the work vehicle 10 is switched to forward or backward. Furthermore, the vehicle control device 11 operates the accelerator to control a rotational speed of the engine 131. Furthermore, the vehicle control device 11 operates the brake to brake rotation of the front wheels 132 and the rear wheels 133 by using an electromagnetic brake.

The positioning unit 16 is a communication device including a positioning control unit 161, a storage unit 162, a communication unit 163, a positioning antenna 164, and the like (see Fig. 1). For example, as illustrated in Fig. 2, the positioning unit 16 is provided at an upper part of a cabin 138 on which the worker boards. Furthermore, an installation position of the positioning unit 16 is not limited to the cabin 138. Furthermore, the positioning control unit 161, the storage unit 162, the communication unit 163, and the positioning antenna 164 of the positioning unit 16 may be separately arranged at different positions in the work vehicle 10. Note that, as described above, the battery is connected to the positioning unit 16, and the positioning unit 16 can operate even while the engine 131 is stopped. Furthermore, the positioning unit 16 may be substituted by, for example, a mobile phone terminal, a smartphone, a tablet terminal, a quantum compass, or the like.

The positioning control unit 161 is a computer system including one or a plurality of processors and a storage memory such as a non-volatile memory and a RAM. The storage unit 162 is a non-volatile memory or the like that stores a program for causing the positioning control unit 161 to execute positioning processing, and data such as positioning information and movement information. For example, the program is non-temporarily recorded in a computer-readable recording medium such as a CD or a DVD, and is read by a predetermined reading device (not illustrated) and stored in the storage unit 162. Note that the program may be downloaded from a server (not illustrated) to the positioning unit 16 via the communication network N1 and stored in the storage unit 162.

The communication unit 163 is a communication interface for connecting the positioning unit 16 to the communication network N1 by wire or wirelessly and executing data communication according to a predetermined communication protocol with an external device such as a base station server via the communication network N1.

The positioning antenna 164 is an antenna that receives a radio wave (GNSS signal) transmitted from a satellite.

The positioning control unit 161 calculates a current position of the work vehicle 10 based on the GNSS signal accepted by the positioning antenna 164 from the satellite. For example, in a case where the work vehicle 10 automatically travels in the field F, when the positioning antenna 164 receives a radio wave (a transmission time, orbital information, or the like) transmitted from each of a plurality of satellites, the positioning control unit 161 calculates a distance between the positioning antenna 164 and each satellite, and calculates the current position (a latitude and a longitude) of the work vehicle 10 based on the calculated distance. Furthermore, the positioning control unit 161 may perform positioning by using a real-time kinematic method (RTK-GNSS positioning method (RTK method)) for calculating the current position of the work vehicle 10 using correction information associated with a base station (reference station) near the work vehicle 10. In such a manner, the work vehicle 10 performs automatic traveling by using positioning information obtained by the RTK method. Note that the current position of the work vehicle 10 may be the same position as a positioning position (e.g., a position of the positioning antenna 164), or may be a position shifted from the positioning position. Note that the positioning control unit 161 may calculate (measure) the current position of the work vehicle 10 by using a quantum compass.

The vehicle control device 11 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory for various types of processing executed by the CPU. Furthermore, the vehicle control device 11 controls the work vehicle 10 by executing, with the CPU, various control programs stored in advance in the ROM or the storage unit 12.

More specifically, as illustrated in Fig. 1, the vehicle control device 11 includes various types of processing units such as a travel processing unit 111. Note that the vehicle control device 11 functions as the various types of processing units by executing various types of processing according to the control program with the CPU. Furthermore, part or all of the processing units may include an electronic circuit. Note that the control program may be a program for causing a plurality of processors to function as the processing unit.

The travel processing unit 111 controls traveling of the work vehicle 10. For example, when a traveling mode of the work vehicle 10 is automatic traveling (automatic traveling mode), the travel processing unit 111 causes the work vehicle 10 to automatically travel based on position information (positioning information) indicating a current position of the work vehicle 10 measured by the positioning unit 16. For example, when the work vehicle 10 satisfies an automatic traveling start condition and acquires a work start instruction from the worker, the travel processing unit 111 causes the work vehicle 10 to start automatic traveling based on the positioning information. For example, the travel processing unit 111 causes the work vehicle 10 to automatically travel from a traveling start position to a traveling end position along a target route generated and set in advance in the operation terminal 20. Furthermore, the travel processing unit 111 causes the work vehicle 10 to travel along a plurality of work routes that are routes included in the target route and on which the work vehicle 10 is caused to perform predetermined work, and a plurality of non-work routes that connect the work routes.

Note that, when the traveling mode of the work vehicle 10 is manual traveling (manual traveling mode), the work vehicle 10 can be caused to manually travel based on an operation (manual steering) of the worker. For example, the travel processing unit 111 acquires operation information corresponding to a driving operation such as a steering wheel operation, a shift operation, a traveling direction switching operation, and a brake operation performed by the worker, and causes the traveling device 13 to execute a traveling operation based on the operation information. When, for example, registering the work target field F, the worker gets on the work vehicle 10 and performs manual traveling (teaching traveling) at an outer circumferential portion of an work target area in a predetermined area. Note that, while causing the work vehicle 10 to perform the teaching traveling, the worker may cause the work machine 14 to descend and execute predetermined work (e.g., tilling work).

### [Operation Terminal 20]

As illustrated in Fig. 1, the operation terminal 20 is an information processing apparatus that includes an operation control unit 21, a storage unit 22, an operation display unit 23, a communication unit 24, and the like. The operation terminal 20 may be configured with a portable terminal such as a tablet terminal or a smartphone.

The communication unit 24 is a communication interface for connecting the operation terminal 20 to the communication network N1 by wire or wirelessly and executing data communication according to a predetermined communication protocol with an external device such as one or a plurality of the work vehicles 10 via the communication network N1.

The operation display unit 23 is a user interface including a display unit such as a liquid crystal display or an organic EL display that displays various types of information, and an operation unit such as a touch panel, a mouse, or a keyboard that accepts an operation. The worker can perform an operation of registering various types of information (work vehicle information, field information, work information, and the like to be described later) by operating the operation unit on an operation screen displayed on the display unit. Furthermore, the worker can operate the operation unit to make a work start instruction, a traveling stop instruction, and the like to the work vehicle 10. Furthermore, at a place away from the work vehicle 10, the worker can grasp the traveling state of the work vehicle 10 that automatically travels along the target route in the field F from a traveling trajectory displayed on the operation terminal 20 and a captured image of the camera.

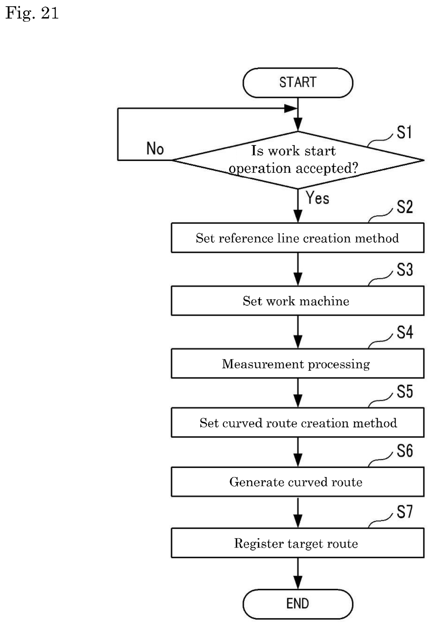

The storage unit 22 is a non-volatile storage unit such as an HDD or an SSD that stores various types of information. The storage unit 22 stores a route generation program for causing the operation control unit 21 to execute route generation processing (see Fig. 21) to be described later, and a control program for causing the operation control unit 21 to execute various control processing. For example, the route generation program is non-temporarily recorded in a computer-readable recording medium such as a CD or a DVD, and is read by a predetermined reading device (not illustrated) and stored in the storage unit 22. Note that the route generation program may be downloaded from a server (not illustrated) to the operation terminal 20 via the communication network N1 and stored in the storage unit 22.

The operation control unit 21 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory (work area) for various types of processing executed by the CPU. Furthermore, the operation control unit 21 controls the operation terminal 20 by executing, with the CPU, various control programs stored in advance in the ROM or the storage unit 22.

As illustrated in Fig. 1, the operation control unit 21 includes various types of processing units such as a registration processing unit 211, a setting processing unit 212, a generation processing unit 213, and an output processing unit 214. Note that the operation control unit 21 functions as the various types of processing units by executing, with the CPU, various types of processing according to the route generation program. Furthermore, part or all of the processing units may include an electronic circuit. Note that the route generation program may be a program for causing a plurality of processors to function as the processing unit.

The registration processing unit 211 registers various types of setting information for causing the work vehicle 10 to execute automatic traveling. Specifically, the registration processing unit 211 registers information related to the work vehicle 10 (hereinafter referred to as work vehicle information). When the worker performs a registration operation on the operation terminal 20, the registration processing unit 211 registers information such as a type( model) of the work vehicle 10, a position at which the positioning antenna 164 is attached in the work vehicle 10, a type of the work machine 14, a size and a shape of the work machine 14, a position of the work machine 14 with respect to the work vehicle 10, a vehicle speed and an engine rotational speed during work of the work vehicle 10, and a vehicle speed and an engine rotational speed during turning of the work vehicle 10.

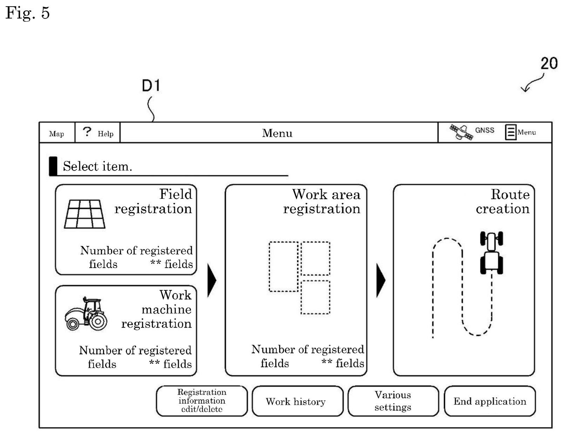

For example, the registration processing unit 211 causes the operation display unit 23 to display a menu screen D1 illustrated in Fig. 5. The worker selects "WORK MACHINE REGISTRATION" on the menu screen D1 and registers work machine information related to the work machine 14.

Furthermore, the registration processing unit 211 registers information related to the field F (hereinafter referred to as field information). The registration processing unit 211 registers information such as the position and the shape of the field F, a traveling start position at which work starts and a traveling end position at which work ends, a work direction, and the like by performing the registration operation on the operation terminal 20. Note that the work direction means a direction in which the work vehicle 10 travels while performing work with the work machine 14 in the work area excluding the non-work area from the field F. For example, the worker selects "FIELD REGISTRATION" on the menu screen D1 and registers the field information.

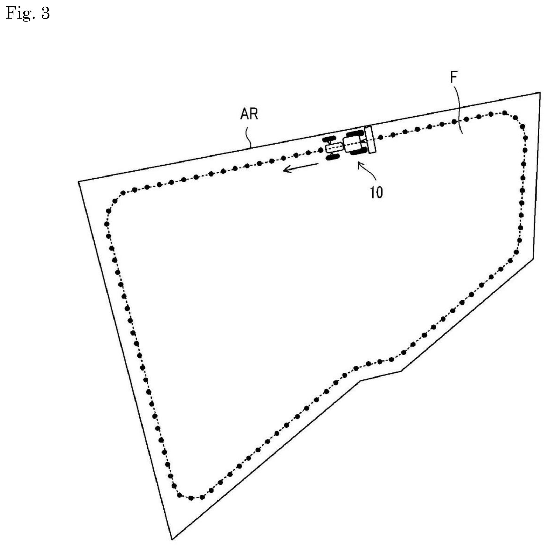

The information on the position and the shape of the field F can be automatically acquired by, for example, the worker by getting on the work vehicle 10, driving the work vehicle 10 so as to make one round along an outer circumference of a predetermined area AR (see Fig. 3), and recording a transition of position information on the positioning antenna 164 at that time.

Specifically, the registration processing unit 211 acquires position information of a current position of the work vehicle 10 based on the positioning information measured by the positioning unit 16. When acquiring the position information, the registration processing unit 211 registers the position information in the storage unit 22. When, for example, the worker causes the work vehicle 10 to manually travel (teaching traveling) in the predetermined area AR at a time of registering the field F (see Fig. 3), the registration processing unit 211 acquires the position information of the work vehicle 10 at a predetermined sampling interval. Black dots illustrated in Fig. 3 correspond to the position information of respective positioning points.

Furthermore, while causing the work vehicle 10 to perform the teaching traveling, the worker may cause the work machine 14 to descend to perform predetermined work. The registration processing unit 211 sequentially registers the position information of the work vehicle 10 while the work vehicle 10 is performing teaching traveling.

When the teaching traveling ends, the registration processing unit 211 registers the field F based on the position information. As illustrated in, for example, Fig. 4, the registration processing unit 211 obtains approximate straight lines that connect traveling trajectories (plots) on which the work vehicle 10 has traveled, generates intersection points (complementary points a1 to a6) between extension lines of neighboring approximate straight lines, and registers an area surrounded by the straight lines connecting the generated complementary points a1 to a6 as the field F. Note that the worker can change the positions of the complementary points or add the complementary points. As described above, the registration processing unit 211 registers the field F as a work target area based on the position information acquired by the manual traveling operation of the work vehicle 10 performed by the worker.

Furthermore, the registration processing unit 211 registers information related to how work is to be performed specifically (hereinafter referred to as work information). Furthermore, the registration processing unit 211 is configured to be able to register, as the work information, the presence or absence of cooperative work between the unmanned work vehicle 10 and the manned work vehicle 10, the number of skips that is the number of work routes to be skipped when the work vehicle 10 turns in a headland, a width of the headland, a width of a non-work area, and the like. For example, the worker selects "ROUTE CREATION" on the menu screen D1 and registers information of a traveling route.

The setting processing unit 212 sets a reference line (first reference line Ra) that serves as a reference for generating the target route of the work vehicle 10. Specifically, the setting processing unit 212 sets the first reference line Ra including a plurality of first partial straight lines (straight line segments) based on a plurality of pieces of position information acquired at a time of registering the field F. For example, the setting processing unit 212 sets the first reference line Ra based on position information indicating a traveling trajectory of the work vehicle 10 acquired by a manual traveling operation (teaching traveling operation) of the worker at the time of registering the field F. Hereinafter, a method for generating a target route corresponding to an area A1 in which work is performed while turning is performed in the field F illustrated in Fig. 4 will be cited and described as an example.

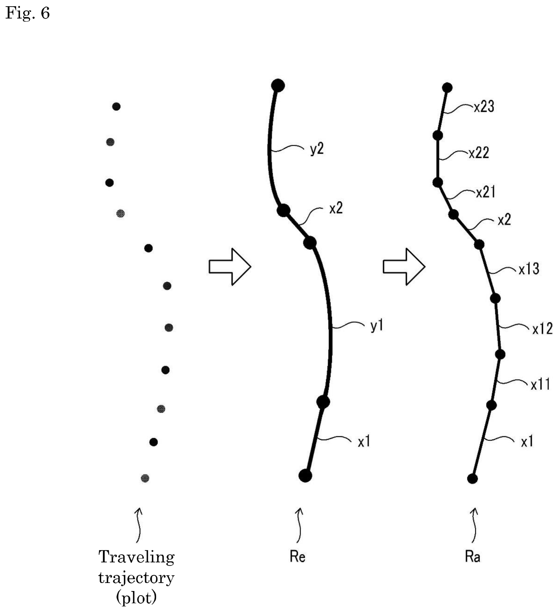

First, the setting processing unit 212 sets a temporary reference line Re including a partial curve (curve segment) based on the plurality of pieces of position information acquired at the time of registering the field F. Specifically, as illustrated in Fig. 6, the setting processing unit 212 sets the temporary reference line Re by connecting the traveling trajectory (plots) associated with the position information of the work vehicle 10 acquired during the teaching traveling (see Fig. 3) with approximate straight lines and approximate curves. Plots included in the temporary reference line Re illustrated in Fig. 6 indicate connection points between partial straight lines (x1 and x2) of the approximate straight lines and partial curves (y1 and y2) of the approximate curves. For example, when plots of three consecutive points are connected by two straight lines, the three points are approximated to one straight line in a case where an angle formed by the two straight lines is a predetermined angle or more, and the three points are approximated to one curve in a case where the angle formed by the two straight lines is less than the predetermined angle.

Next, the setting processing unit 212 sets the first reference line Ra based on the temporary reference line Re. Specifically, the setting processing unit 212 converts the curve (turning route) included in the temporary reference line Re into a straight line based on the turning angle. In the example illustrated in Fig. 6, the setting processing unit 212 converts the partial curve y1 (curve segment) into one or a plurality of partial straight lines based on the turning angle associated with the first partial straight line x1 and the first partial straight line x2. Hereinafter, a specific example of a method for converting a partial curve into a partial straight line will be described.

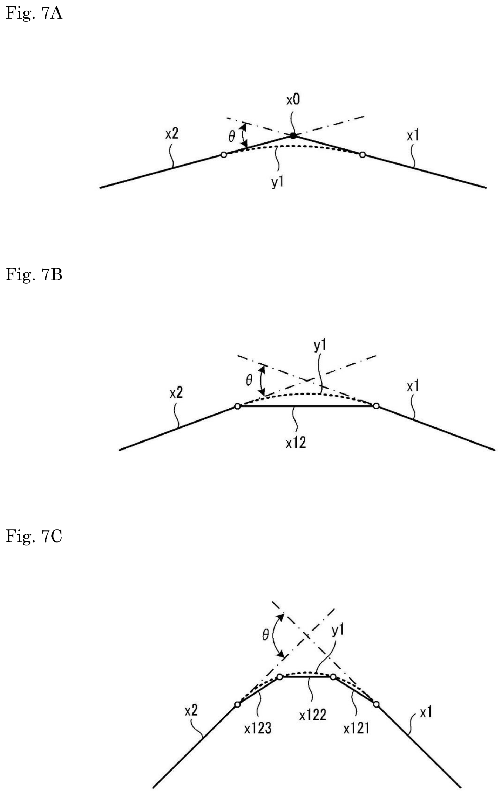

When a turning angle θ between the first partial straight line x1 and the first partial straight line x2 is less than a first predetermined angle (e.g., three degrees) (in other words, when an angle (180 degrees-θ) formed by the first partial straight line x1 and the first partial straight line x2 is 177 degrees or more) as illustrated in, for example, Fig. 7A, the setting processing unit 212 obtains an intersection point x0 of an extension line of the first partial straight line x1 and an extension line of the first partial straight line x2. Furthermore, the setting processing unit 212 deletes the partial curve y1 to replace with the first partial straight line x1 and the first partial straight line x2 connected at the intersection point x0. That is, the setting processing unit 212 replaces the first partial straight line x1, the partial curve y1, and the first partial straight line x2 with the two extended first partial straight lines x1 and x2.

Furthermore, when the turning angle θ between the first partial straight line x1 and the first partial straight line x2 is equal to or greater than a first predetermined angle (e.g., three degrees) and is less than a second predetermined angle (e.g., six degrees) as illustrated in, for example, Fig. 7B, the setting processing unit 212 replaces the partial curve y1 with one complementary line (first partial straight line x12). That is, the setting processing unit 212 replaces the first partial straight line x1, the partial curve y1, and the first partial straight line x2 with the three first partial straight lines x1, x12, and x2.

Furthermore, when the turning angle θ between the first partial straight line x1 and the first partial straight line x2 is equal to or greater than the second predetermined angle (e.g., six degrees) as illustrated in, for example, Fig. 7C, the setting processing unit 212 replaces the partial curve y1 with a plurality of complementary lines. Specifically, the setting processing unit 212 sets a value calculated by dividing the turning angle θ by the setting angle as the number of complementary points, and arranges the calculated number of complementary points at equal intervals on the partial curve y1. In Fig. 7C, the setting processing unit 212 arranges two complementary points on the partial curve y1 and replaces the partial curve y1 with three first partial straight lines x121 to x123. The setting processing unit 212 replaces the first partial straight line x1, the partial curve y1, and the first partial straight line x2 with the five first partial straight lines x1, x121, x122, x123, and x2.

The setting processing unit 212 converts each partial curve included in the temporary reference line Re into a partial straight line by the above-described method. Furthermore, as illustrated in Fig. 6, the setting processing unit 212 sets the first reference line Ra including a plurality of straight lines (first partial straight lines) based on the temporary reference line Re. In the first reference line Ra illustrated in Fig. 6, the partial curve y1 of the temporary reference line Re is converted into first partial straight lines x11 to x13, and the partial curve y2 of the temporary reference line Re is converted into first partial straight lines x21 to x23. The first reference line Ra includes eight partial straight lines.

As described above, the setting processing unit 212 sets the first reference line Ra based on the temporary reference line Re including the partial curve generated based on the plurality of pieces of position information. Furthermore, the setting processing unit 212 sets the temporary reference line Re including the partial straight line and the partial curve based on the plurality of pieces of position information, converts the partial curve into one or a plurality of partial straight lines according to an angle (or a turning angle) formed by the two partial straight lines, and sets the first reference line Ra by connecting the partial straight line included in the temporary reference line Re and the partial straight line obtained by converting the partial curve included in the temporary reference line Re. Furthermore, the operation control unit 21 determines the number of the partial straight lines for converting the partial curve based on an angle (turning angle) formed by the two first partial straight lines.

The generation processing unit 213 generates the target route on which the work vehicle 10 is caused to automatically travel in the field F. When the worker selects "ROUTE CREATION" on the menu screen D1 (see Fig. 5), and a target route generation instruction is accepted, the generation processing unit 213 executes target route generation processing. Specifically, the generation processing unit 213 sets one of a first route generation mode of generating the target route based on the first reference line Ra serving as the reference at a time of generating the target route, and a second route generation mode of generating the target route based on the first reference line Ra and a second reference line Rb having a shape or an azimuth different from that of the first reference line Ra, and generates the target route based on the first route generation mode or the second route generation mode.

### [First Route Generation Mode]

Hereinafter, an example of a target route generation method in the first route generation mode will be described. In the first route generation mode, the generation processing unit 213 generates the target route by setting the shapes or the azimuths of all work routes included in a target route based on the shape or the azimuth of the first reference line Ra.

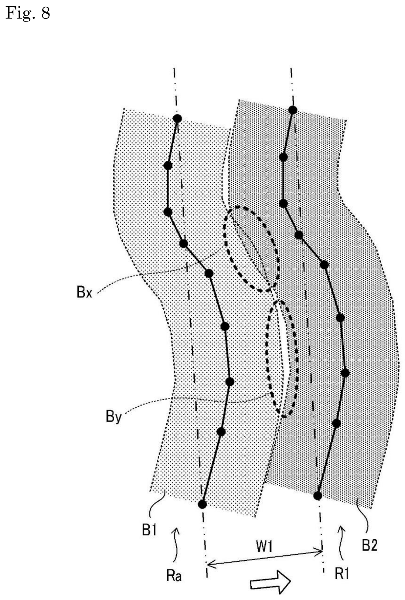

Here, in the first route generation mode, for example, a method for duplicating (translating) the first reference line Ra and generating a target route is conceivable. However, this method causes the following problems. Specifically, when a work route R1 (target route) is generated by translating the first reference line Ra by a distance corresponding to a work width W1 as illustrated in Fig. 8, there is a problem that a worked area B1 in a case where work is performed by performing traveling on the first reference line Ra and a worked area B2 in a case where work is performed by performing traveling on the work route R1 overlap (an overlap area of a portion Bx), or a gap (an unworked area of a portion By) is produced between the worked areas B1 and B2.

Hence, the generation processing unit 213 is configured to individually translate each of the plurality of first partial straight lines constituting the first reference line Ra by a predetermined distance, and connect each of the plurality of second partial straight lines associated with each of the plurality of translated first partial straight lines to generate the target route. According to the above configuration, it is possible to solve the above problem illustrated in Fig. 8 as described below.

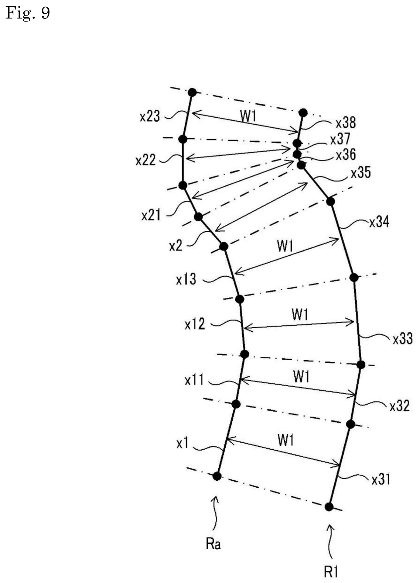

Specifically, as illustrated in Fig. 9, the generation processing unit 213 translates the first partial straight line x1 of the first reference line Ra by the work width W1 to generate a second partial straight line x31, translates the first partial straight line x11 by the work width W1 to generate a second partial straight line x32, translates the first partial straight line x12 by the work width W1 to generate a second partial straight line x33, translates the first partial straight line x13 by the work width W1 to generate a second partial straight line x34, translates the first partial straight line x2 by the work width W1 to generate a second partial straight line x35, translates the first partial straight line x21 by the work width W1 to generate a second partial straight line x36, translates the first partial straight line x22 by the work width W1 to generate a second partial straight line x37, and translates the first partial straight line x23 by the work width W1 to generate a second partial straight line x38. Furthermore, the generation processing unit 213 connects the plurality of translated second partial straight lines x31 to x38 to generate the work route R1 (target route).

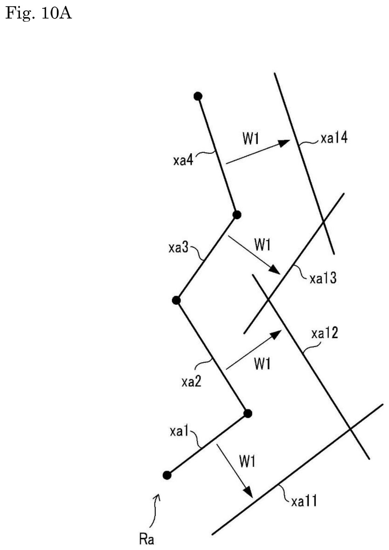

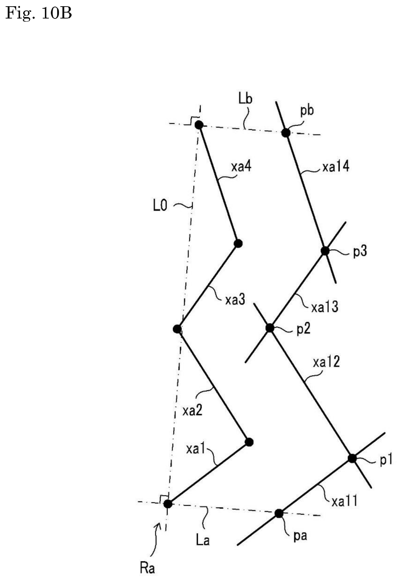

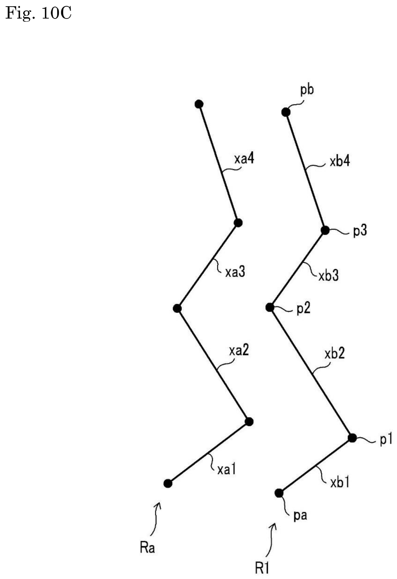

Details of a procedure of the target route generation method will be described with reference to Figs. 10A to 10C. Fig. 10A illustrates the first reference line Ra including four first partial straight lines xa1 to xa4. First, as illustrated in Fig. 10A, the generation processing unit 213 translates each of the first partial straight lines xa1 to Xa4 by the work width W1. Next, the generation processing unit 213 extends each of translated straight lines xa11 to xa14. Next, as illustrated in Fig. 10B, the generation processing unit 213 obtains intersection points p1 to p3 of the extended straight lines xa11 to xa14. Furthermore, the generation processing unit 213 obtains an intersection point pa of the straight line xa11 and an orthogonal line La that is orthogonal to a straight line L0 connecting a start point and an end point of the first reference line Ra and passes the start point, and obtains an intersection point pb of the straight line xa14 and an orthogonal line Lb that is orthogonal to the straight line L0 and passes the end point. Furthermore, as illustrated in Fig. 10C, the generation processing unit 213 generates a target route (work route R1) including a second partial straight line xb1 connecting the intersection points pa and p1, a second partial straight line xb2 connecting the intersection points p1 and p2, a second partial straight line xb3 connecting the intersection points p2 and p3, and a second partial straight line xb4 connecting the intersection points p3 and pb.

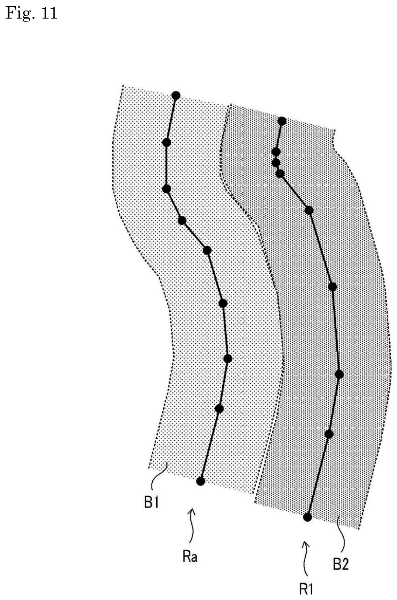

By generating the target route by the above method, it is possible to solve the problem of overlapping of and a gap between the above-described work widths (see Fig. 8). Fig. 11 illustrates the work route R1 (target route) generated based on the first reference line Ra. As illustrated in Fig. 11, the worked area B1 corresponding to the first reference line Ra and the worked area B2 corresponding to the work route R1 do not overlap or a gap is not produced between the worked areas B1 and B2, so that it is possible to improve work accuracy of turning work.

Similarly, the generation processing unit 213 generates a neighboring work route based on the work route R1.

### [Second Route Generation Mode]

Hereinafter, an example of a target route generation method in the second route generation mode will be described. In the second route generation mode, the generation processing unit 213 sets the shape or the azimuth of the first work route included in the target route based on the shape or the azimuth of the first reference line Ra, and sets the shape or the azimuth of the second work route included in the target route based on the shape or the azimuth of the second reference line Rb. Specifically, the generation processing unit 213 generates the target route by setting the shapes or the azimuths of the plurality of work routes included in the target route so as to become closer to the shape or the azimuth of the second reference line Rb from the shape or the azimuth of the first reference line Ra toward the alignment direction of the plurality of work routes. That is, in the second route generation mode, the generation processing unit 213 executes correction processing of correcting the curved route to a straight route. Note that the generation processing unit 213 may correct a straight route to a curved route.

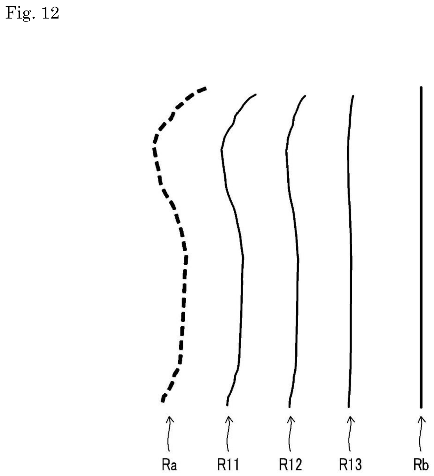

For example, the generation processing unit 213 generates the target route based on the curved first reference line Ra and the straight second reference line Rb. Fig. 12 illustrates an example of the first reference line Ra and the second reference line Rb. The first reference line Ra is a reference curve set by the above-described method (see Figs. 6 and 7). The second reference line Rb is a reference straight line set in advance such as a straight line parallel to the side of the field F, a straight line parallel to the work direction (e.g., the work direction in an inner area of the field F), and a straight line connecting two points (a point A and a point B) registered by the worker.

Specifically, the generation processing unit 213 sets the shape and the azimuth of one or a plurality of work routes among a plurality of work routes included in the target route based on the shape and the azimuth of the second reference line Rb. Fig. 12 illustrates three work routes R11, R12, and R13 included in the target route. Note that the number of work routes set to the headland area corresponds to the number of work processes set to the headland area. The generation processing unit 213 generates the work routes R11, R12, and R13 so as to match the curved shape of the first reference line Ra, and further generates the work routes R11, R12, and R13 such that the curved shapes of the work routes R11, R12, and R13 become closer to the straight shape of the second reference line Rb.

As illustrated in, for example, Fig. 12, the work route R11 has a shape close to the curved shape of the first reference line Ra, and the work route R13 has a shape close to the straight shape of the second reference line Rb. Specifically, the generation processing unit 213 sets the shapes and the azimuths of the work routes R11, R12, and R13 based on the distance from the first reference line Ra. For example, the generation processing unit 213 makes the shape and the azimuth of each of the work routes R11, R12, and R13 closer to the shape and the azimuth of the second reference line Rb as the distance from the first reference line Ra becomes longer.

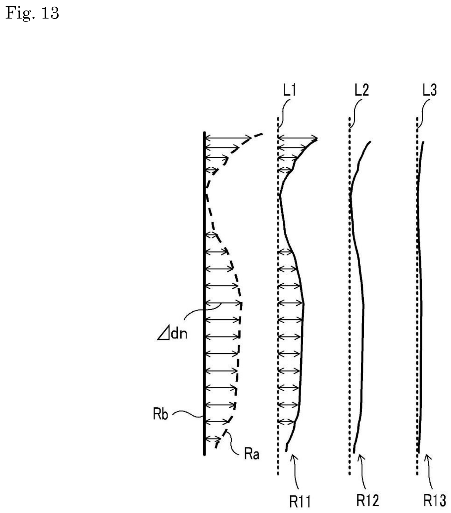

Fig. 13 illustrates an example of a specific method for generating a work route. Here, the three work routes R11, R12, and R13 are exemplified. The generation processing unit 213 sets three reference lines L1, L2, and L3 that are parallel to the second reference line Rb and are at equal intervals. The intervals between the reference lines L1, L2, and L3 are set based on the work width, an overlap amount, and the like of the work machine 14. Next, the generation processing unit 213 calculates a deviation Δdn between the first reference line Ra and the second reference line Rb (a distance of an arrow illustrated in Fig. 13). Note that, although the second reference line Rb is set at a position in contact with a left end part of the first reference line Ra in the example illustrated in Fig. 13, the second reference line Rb may be set at a position of the center or a position of a right end part of the first reference line Ra.

Next, the generation processing unit 213 sets a subtraction amount of the deviation Δdn between the work route and the second reference line Rb for each work route. The generation processing unit 213 gradually increases the subtraction amount apart from the first reference line Ra. For example, here, since the number of work routes is "three", the generation processing unit 213 sets the subtraction amount per work route to "Δdn/3".

Furthermore, the generation processing unit 213 sets a route (work route R11) obtained by subtracting "Δdn ×1/3" from the deviation Δdn between the first reference line Ra and the second reference line Rb as the position of the reference line L1. Furthermore, the generation processing unit 213 sets a route (work route R12) calculated by subtracting "Δdn ×2/3" from the deviation Δdn between the first reference line Ra and the second reference line Rb as the position of the reference line L2. Furthermore, the generation processing unit 213 sets a route (work route R13) calculated by subtracting "Δdn ×3/3" from the deviation Δdn between the first reference line Ra and the second reference line Rb as the position of the reference line L3.

Note that the generation processing unit 213 may execute addition processing instead of subtraction processing. For example, the generation processing unit 213 may gradually increase an addition amount apart from the first reference line Ra such that the deviation becomes deviation larger than Δdn.

Thus, the plurality of work routes gradually change from the curved shapes to the straight shapes in the alignment direction. When, for example, the outer shape side of the field F has a curved shape, the plurality of work routes become closer to the curved shape of the first reference line Ra toward the outer circumferential side, and become closer to the straight shape of the second reference line Rb toward the inner circumferential side of the field F. Note that the generation processing unit 213 may set the work route closest to the inner circumferential area among the plurality of work routes of the headland area as a straight line so as to substantially match with the shape and the azimuth of the second reference line Rb.

In another embodiment, the setting processing unit 212 may set the first reference line Ra on the inner circumferential side of the field F, and set the second reference line Rb along a straight field side on the outer circumferential side of the field F. For example, the setting processing unit 212 sets the first reference line Ra of the curve according to the work trajectory when the worker freely performs work on the inner circumferential side of the field F. In this case, the generation processing unit 213 generates a work route that becomes closer to the shape of the straight second reference line Rb toward the outer circumferential side of the field F, and a work route that becomes closer to the shape of the curved first reference line Ra toward the inner circumferential side of the field F.

As described above, in the second route generation mode, when the number of set work routes is set to N, the generation processing unit 213 makes the shape and the azimuth of each of the first to (N-1)th work routes closer to the shape and the azimuth of the first reference line Ra as the distance from the first reference line Ra becomes longer, and matches the shape and the azimuth of the Nth work route with the shape and the azimuth of the second reference line Rb.

In another embodiment, the shape and the azimuth of the Nth work route may not match with the shape and the azimuth of the second reference line Rb and may have a curved shape. For example, the generation processing unit 213 may make the shape and the azimuth of each of the first to Nth work routes closer to the shape and the azimuth of the first reference line Ra as the distance from the first reference line Ra becomes longer, and may match the shape and the azimuth of a (N+1)th work route next to the Nth work route with the shape and the azimuth of the second reference line Rb.

Note that the number of work routes until the work route matches with the shape and the azimuth of the second reference line Rb may be set to a (fixed) specification that cannot be changed.

By the generation method in the above second route generation mode, it is possible to generate a target route whose curved route gradually becomes closer to the straight route.

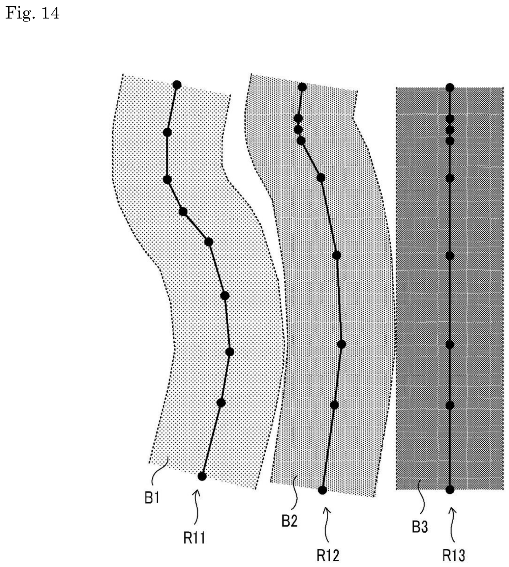

Here, in the second route generation mode, since the shapes of the two neighboring work routes are different, as illustrated in Fig. 14, gaps having different sizes are produced between the worked areas (work widths) when the work is performed by performing traveling on the respective work routes. Gaps produced between such work widths may be permitted or may not be permitted depending on the contents of the work.

Hence, the second route generation mode may further include an overlap mode of generating a target route by overlapping part of the work widths of the neighboring work routes included in the target route, and a non-overlap mode of generating a target route without overlapping the work widths of the neighboring work routes included in the target route.

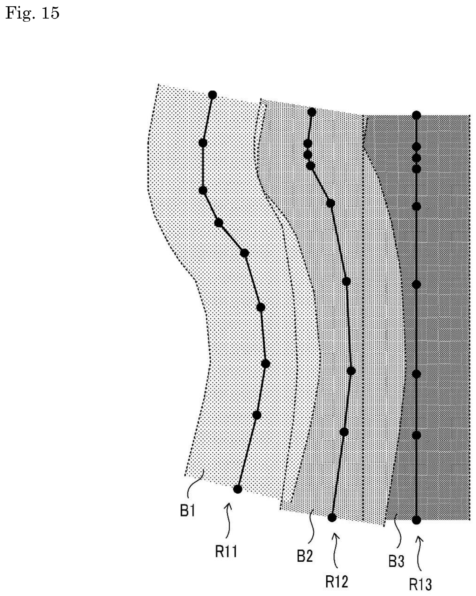

When the non-overlap mode is set, as illustrated in Fig. 14, the generation processing unit 213 generates a target route such that the work widths (worked area B1, B2, and B3) of the neighboring work routes do not overlap each other. By contrast with this, when the overlap mode is set, as illustrated in Fig. 15, the generation processing unit 213 generates a target route such that a gap is not produced by overlapping part of the work widths (worked area B1, B2, and B3) of the neighboring work routes. Note that, in the overlap mode, the generation processing unit 213 may generate a target route by aligning a plurality of work routes such that an overlap area between the neighboring work widths is minimized. In another embodiment, the generation processing unit 213 may generate a target route for a first area of the field F in the overlap mode, and generate a target route for a second area of the field F in the non-overlap mode.

As described above, the generation processing unit 213 generates the target route based on the first route generation mode or the second route generation mode. Furthermore, in the second route generation mode, the generation processing unit 213 generates the target route based on the overlap mode or the non-overlap mode. When generating the target route of the work vehicle 10, the generation processing unit 213 registers (stores) the target route. For example, the generation processing unit 213 may register the target route in association with the field F, or may register the target route without associating the target route with the field F. Note that the generation processing unit 213 can generate and register a plurality of target routes matching work contents for the one field F.

Furthermore, the output processing unit 214 outputs route data of the target route to the work vehicle 10. For example, when the worker selects a desired target route on an operation screen and gives a work start instruction, the output processing unit 214 outputs route data of the selected target route to the work vehicle 10.

The work vehicle 10 is configured such that the route data of the target route generated by the operation terminal 20 is transferred to the work vehicle 10 and stored in the storage unit 12, and the work vehicle 10 can autonomously travel along the target route while the positioning antenna 164 detects the current position of the work vehicle 10. Note that the current position of the work vehicle 10 may normally match with the position of the positioning antenna 164.

For example, in a case where a predetermined start condition is satisfied, when the worker presses a work start button on the operation screen to give the work start instruction to the work vehicle 10, the travel processing unit 111 starts automatic traveling to start work (see Fig. 2) of the work machine 14. For example, the operation control unit 21 permits automatic traveling of the work vehicle 10 on a condition that the current position of the work vehicle 10 is within a predetermined distance from the traveling start position and a vehicle azimuth is within a predetermined azimuth. Note that the start condition for permitting the automatic traveling of the work vehicle 10 is not limited to the above condition.

The travel processing unit 111 of the work vehicle 10 causes the work vehicle 10 to automatically travel from the traveling start position to the traveling end position along the target route acquired from the operation terminal 20.

Note that the operation terminal 20 may be able to access a website (agricultural support site) of an agricultural support service provided by a server (not illustrated) via the communication network N1. In this case, the operation terminal 20 can function as an operation terminal of the server, by the operation control unit 21 executing a browser program. Furthermore, the server includes each of the above-described individual processing units and executes each processing.

### [Operation Screen At Time of Route Generation]

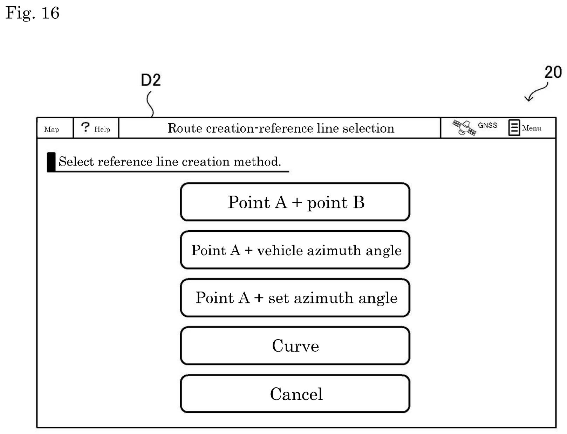

When generating the target route, the generation processing unit 213 causes the operation terminal 20 to display an operation screen for accepting an operation of the worker. Specifically, when the worker selects "ROUTE CREATION" on the menu screen D1 and transitions to a route generation stage, the generation processing unit 213 displays a reference line selection screen D2 (see Fig. 16) for selecting a reference line creation method.

Specifically, the generation processing unit 213 causes the reference line selection screen D2 to selectably display items associated with a first method ("POINT A+POINT B") for creating as a reference line a straight line connecting two points when the worker causes the work vehicle 10 to manually travel and perform a registration operation at arbitrary positions (the point A and the point B), a second method ("POINT A+VEHICLE AZIMUTH ANGLE") for creating as a reference line a straight line passing the position (point A) of the work vehicle 10 at a time when the worker performs the registration operation at an arbitrary position and extending in an azimuth (vehicle azimuth angle) at the position, a third method ("POINT A+SET AZIMUTH ANGLE") for creating as a reference line a straight line passing the position (point A) of the work vehicle 10 at the time when the worker performs the registration operation at an arbitrary position and extending in an azimuth (set azimuth angle) set by the worker, and a fourth method ("CURVE") for creating a reference line based on the curved traveling trajectory at a time when the worker causes the work vehicle 10 to manually travel.

The first to third methods ("POINT A+POINT B", "POINT A+VEHICLE AZIMUTH ANGLE", and "POINT A+SET AZIMUTH ANGLE") support a route generation mode (straight line mode) of generating a target route based on a straight reference line that does not include a curved portion, and the fourth method ("CURVE") supports a route generation mode (curve mode) of generating a target route based on a reference line (first reference line Ra) that includes a curved portion. Note that, when the worker selects "CURVE", the generation processing unit 213 creates the first reference line Ra based on the above-described configuration (see Figs. 6 and 7).

In this way, the generation processing unit 213 displays the reference line selection screen D2 that enables selection of the curve mode ("CURVE" in Fig. 16) of generating the target route based on the first reference line Ra including the curved portion, and the straight line mode ("POINT A+POINT B", "POINT A+VEHICLE AZIMUTH ANGLE", and "POINT A+SET AZIMUTH ANGLE" in Fig. 16) of generating the target route based on the straight first reference line Ra that does not include the curved portion. Hereinafter, a configuration in a case where the worker selects "CURVE" will be described.

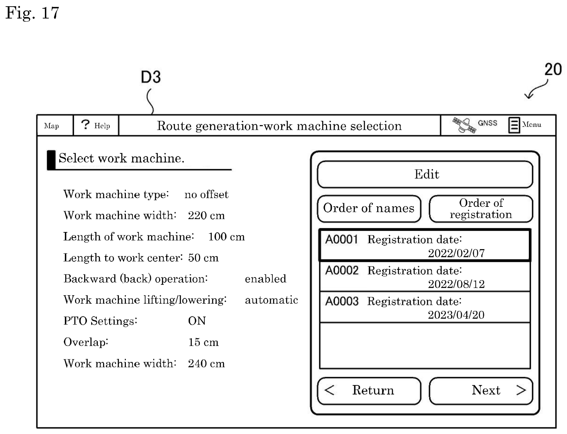

When the worker selects the reference line creation method on the reference line selection screen D2, the generation processing unit 213 displays a work machine selection screen D3 (see Fig. 17) for selecting a work machine. The generation processing unit 213 displays a list of registration information of one or a plurality of work machines registered in advance, and accepts an operation of selecting one of the work machines from the worker.

When the worker selects "CURVE" as the reference line creation method (see Fig. 16) and selects the work machine (see Fig. 17), the generation processing unit 213 displays a measurement screen (not illustrated) for measuring the position (traveling trajectory) of the work vehicle 10 during manual traveling (teaching traveling) of the worker. When the worker performs a measurement start operation on the measurement screen, the generation processing unit 213 starts measuring the position of the work vehicle 10 at the time of manual traveling. When the worker performs a measurement end operation on the measurement screen, the generation processing unit 213 ends measuring the position of the work vehicle 10 at the time of manual traveling.

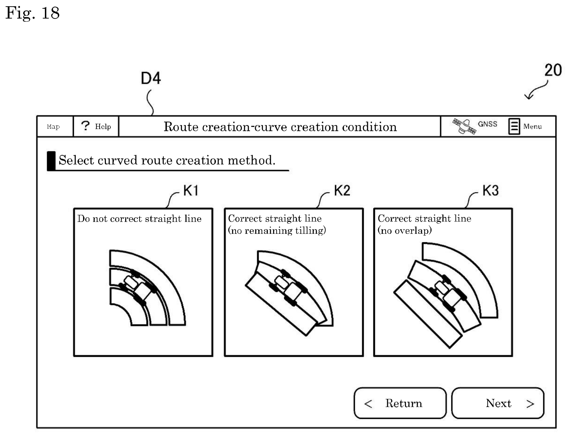

When the measurement is ended, the generation processing unit 213 displays a route creation method selection screen D4 (see Fig. 18) for selecting a curved route (target route) creation method. The generation processing unit 213 causes the route creation method selection screen D4 to selectably display a selection item K1 associated with a route generation mode (first route generation mode) (see Fig. 11) of generating a target route based on the first reference line Ra, a selection item K2 associated with a route generation mode (second route generation mode) of generating a target route based on the first reference line Ra and the second reference line Rb, and the overlap mode (see Fig. 15) of generating a target route by overlapping part of work widths of neighboring work routes, and a selection item K3 associated with a route generation mode (second route generation mode) of generating a target route based on the first reference line Ra and the second reference line Rb, and the non-overlap mode (see Fig. 14) of generating the target route without overlapping the work widths of the neighboring work routes. The worker selects one of the selection items K1 to K3. The first route generation mode is a route generation mode of not correcting a curved route to a straight route, and the second route generation mode is a route generation mode of correcting a curved route to a straight route. Furthermore, the overlap mode of the second route generation mode is a route generation mode of correcting a curved route to a straight route and overlapping neighboring work routes, and the non-overlap mode of the second route generation mode is a route generation mode of correcting a curved route to a straight route and not overlapping neighboring work routes.

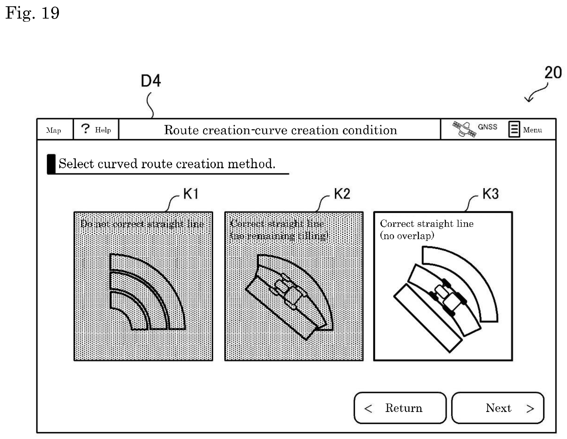

In another embodiment, the generation processing unit 213 may cause the route creation method selection screen D4 to identifiably display a mode matching the work machine 14 or work contents among the first route generation mode (selection item K1), the overlap mode (selection item K2), and the non-overlap mode (selection item K3). For example, the generation processing unit 213 may cause the route creation method selection screen D4 to identifiably display a recommended mode suitable for the work machine 14 or the work contents among the first route generation mode, the overlap mode, and the non-overlap mode. Specifically, the generation processing unit 213 may display the overlap mode as the recommended mode when overlap work is allowed, and display the non-overlap mode as the recommended mode when the overlap work is not allowed. In another embodiment, the worker may select permission or non-permission of overlap work. Furthermore, as illustrated in, for example, Fig. 19, the generation processing unit 213 may cause the route creation method selection screen D4 to selectably display the recommended mode (here, "non-overlap mode"), and set another mode (here, the "first route generation mode" and the "overlap mode") to display or hide in an unselectable (grayed-out display) manner.

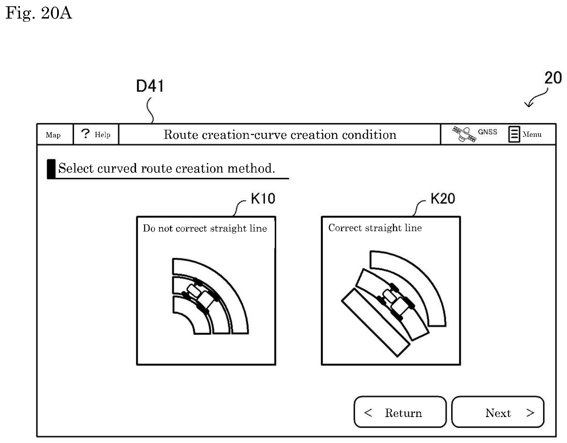

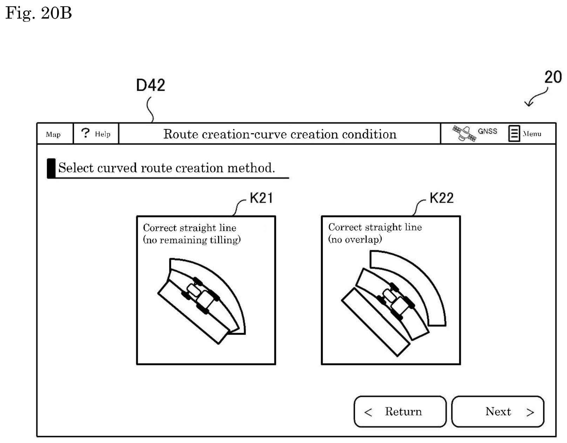

The selection items K1 to K3 are collectively displayed on the route creation method selection screen D4 in the example illustrated in Fig. 18. However, in another embodiment, as illustrated in Fig. 20A, the generation processing unit 213 may cause a route creation method selection screen D41 to selectably display a selection item K10 associated with the first route generation mode and a selection item K20 associated with the second route generation mode. That is, the generation processing unit 213 may display a selection screen (route creation method selection screen D41) that enables selection of one of the first route generation mode and the second route generation mode. Furthermore, when the worker selects the selection item K20 (second route generation mode) on the route creation method selection screen D41, the generation processing unit 213 may cause a route creation method selection screen D42 to selectably display a selection item K21 associated with the overlap mode and the selection item K22 associated with the non-overlap mode as illustrated in Fig. 20B.

The generation processing unit 213 generates the target route (see Figs. 11, 14, and 15) based on the route generation mode (the first route generation mode or the second route generation mode (the overlap mode or the non-overlap mode)) selected by the worker. Specifically, the generation processing unit 213 generates a target route by setting the shapes of the plurality of work routes included in the target route to become closer to a straight line from a curve or to a curve from a straight line toward the alignment direction of the plurality of work routes in the curve mode and the second route generation mode (see Figs. 14 and 15), and generates a target route by setting (maintaining) the shape of each of the plurality of work routes included in the target route to a curved shape in the curve mode and the first route generation mode (see Fig. 11).

Furthermore, the generation processing unit 213 generates a target route such that a gap is not produced by overlapping part of neighboring work widths while setting the shapes of the plurality of work routes included in the target route to become closer to a straight line from a curve toward the alignment direction of the plurality of work routes in the curve mode and the overlap mode (see Fig. 15), and generates the target route such that the neighboring work widths do not overlap each other while setting the shapes of the plurality of work routes included in the target route to become closer to a straight line from a curve toward the alignment direction of the plurality of work routes in the curve mode and the non-overlap mode (see Fig. 14).

The generation processing unit 213 displays the generated target route, and registers the target route in association with the field F when the worker performs the registration operation. Note that the generation processing unit 213 may register the target route without associating the target route with the field F.

In another embodiment, the generation processing unit 213 may cause the route creation method selection screen D4 (see Fig. 18 and the like) to display the target route associated with each of the first route generation mode, the overlap mode, and the non-overlap mode, and accept an operation of selecting any target route from the worker. According to this configuration, the worker can check the target route of each mode. Furthermore, the generation processing unit 213 may enable the worker to switch between the route creation method selection screen D4 for selecting the first route generation mode, the overlap mode, and the non-overlap mode, and a screen for displaying the target route associated with each of the first route generation mode, the overlap mode, and the non-overlap mode.

### [Route Generation Processing]

Hereinafter, an example of the route generation processing executed by the automatic traveling system 1 will be described with reference to Fig. 21.

Note that the present invention can be understood as an invention of the route generation method for executing one or a plurality of steps included in the route generation processing. Furthermore, one or a plurality of steps included in the route generation processing described here may be omitted as appropriate. Note that the steps in the route generation processing may be executed in a different order as long as the same operational effect is achieved. Furthermore, here, a case where the operation control unit 21 executes each step in the route generation processing will be cited and described as an example. However, a route generation method where one or a plurality of processors execute each step in the route generation processing in a distributed manner is also considered as another embodiment.

### <Step S1>

In step S1, the operation control unit 21 determines on an operation screen (not illustrated) whether or not a start operation of work of creating a target route has been accepted from the worker. When accepting the work start operation from the worker (S1: Yes), the operation control unit 21 causes the processing to proceed to step S2. The operation control unit 21 repeats the determination processing in step S1 until the work start operation is accepted from the worker (S1: No).

### <Step S2>

In step S2, the operation control unit 21 sets the reference line creation method (reference line creation mode). Specifically, the operation control unit 21 accepts on the reference line selection screen D2 illustrated in Fig. 16 an operation of selecting any one of the first method ("POINT A+POINT B"), the second method ("POINT A+VEHICLE AZIMUTH ANGLE"), the third method ("POINT A+SET AZIMUTH ANGLE"), and the fourth method ("CURVE") from the worker. The operation control unit 21 sets the method selected by the worker. Here, the worker selects "CURVE", and the operation control unit 21 sets the curve mode.

### <Step S3>

In step S3, the operation control unit 21 sets a work machine. Specifically, the operation control unit 21 accepts an operation of selecting the work machine among the work machines registered in advance, on the work machine selection screen D3 illustrated in Fig. 17 from the worker.

### <Step S4>

In step S4, the operation control unit 21 executes measurement processing for setting the reference line. Specifically, when the worker performs a measurement start operation on the measurement screen (not illustrated), the operation control unit 21 starts recording a traveling position (traveling trajectory) of the work vehicle 10. The worker causes the work vehicle 10 to manually travel by manual steering. For example, the worker causes the work vehicle 10 to travel in a curved shape according to a desired work method or traveling method. Furthermore, the worker causes the work vehicle 10 to travel along the outer shape side of the curved shape of the work target field F. When the worker performs a measurement end operation on the measurement screen, the operation control unit 21 ends recording the traveling position (traveling trajectory). The operation control unit 21 stores position information (measurement points) measured from the start to the end of measurement.

### <Step S5>

In step S5, the operation control unit 21 sets a curved route (target route) creation method. Specifically, the operation control unit 21 causes the route creation method selection screen D4 illustrated in Fig. 18 to selectably display the first route generation mode (selection item K1) of not correcting a curved route to a straight route, the overlap mode (second route generation mode) (selection item K2) of correcting a curved route to a straight route and overlapping neighboring work routes, and a non-overlap mode (second route generation mode) (selection item K3) of correcting a curved route to a straight route and not overlapping neighboring work routes, and accepts a selection operation from the worker. The worker selects any one of the route generation modes on the route creation method selection screen D4.

In another embodiment, the operation control unit 21 may identifiably display the recommended mode matching the work machine 14 or the work contents among the first route generation mode, the overlap mode, and the non-overlap mode (see Fig. 19).

The operation control unit 21 sets the route generation mode selected by the worker. In another embodiment, the operation control unit 21 may automatically set the route generation mode based on the work machine 14 or the work contents among the first route generation mode, the overlap mode, and the non-overlap mode. Furthermore, when, for example, the worker selects the second route generation mode, the operation control unit 21 may set the overlap mode or the non-overlap mode based on the type of the work machine 14 or the work contents.

### <Step S6>

In step S6, the operation control unit 21 generates a curved route (target route). Specifically, the operation control unit 21 generates the target route based on the route generation mode (the first route generation mode and the second route generation mode (the overlap mode and the non-overlap mode)) set in step S5.

Specifically, the operation control unit 21 sets the first reference line Ra based on the position information (traveling trajectory) acquired by the measurement processing (step S4). Furthermore, the operation control unit 21 sets, as the second reference line Rb, a straight line parallel to the side of the field F, a straight line parallel to a work direction, or a straight line connecting two points (the point A and the point B) registered by the worker. In another embodiment, in a case where the field F is registered in advance, the operation control unit 21 may set the outer shape side selected by the worker on a map screen of the field F as the reference line. When, for example, the worker selects a curved side and a straight side facing each other among the outer shape sides of the field F, the operation control unit 21 may set the curved side as the first reference line Ra and set the straight side as the second reference line Rb.

In the first route generation mode, the operation control unit 21 generates the target route based on the first reference line Ra. For example, the operation control unit 21 sets (maintains) the shape of each of the plurality of work routes to a curved shape based on the first reference line Ra to generate the target route (see Fig. 11). Furthermore, the operation control unit 21 generates a target route such that a gap or an overlapping portion (see Fig. 8) is not produced between work widths (worked area B1 and B2) of neighboring work routes.

In the second route generation mode, the operation control unit 21 generates a target route based on the first reference line Ra and the second reference line Rb. For example, in the non-overlap mode (second route generation mode), the operation control unit 21 generates the target route based on the first reference line Ra and the second reference line Rb such that the curved route gradually becomes closer to the straight route and the work widths (worked area B1, B2, and B3) of the neighboring work routes do not overlap each other (see Fig. 14).

In the overlap mode (second route generation mode), the operation control unit 21 generates the target route based on the first reference line Ra and the second reference line Rb such that the curved route gradually becomes closer to the straight route, and part of the work widths (worked area B1, B2, and B3) of the neighboring work routes overlap each other and no gap is produced (see Fig. 15).

Note that the curve is set as the first reference line Ra and the straight line is set as the second reference line Rb in the above description in the second route generation mode. However, in another embodiment, the straight line may be set as the first reference line Ra and the curve may be set as the second reference line Rb. In this case, the operation control unit 21 may generate the target route by setting the shapes of the plurality of work routes included in the target route to become closer to a curve from a straight line toward the alignment direction of the plurality of work routes. That is, according to the present invention, "generating a target route so as to become closer to a straight line from a curve" and "generating a target route so as to become closer to a curve from a straight line" have the same meaning.

### <Step S7>

In step S7, the operation control unit 21 registers the target route. Specifically, the operation control unit 21 causes the operation terminal 20 to display the target route generated in step S6, and accepts the registration operation from the worker. When determining that there is no problem with the generated target route, the worker performs a registration operation. Furthermore, when desiring to change the target route, the worker returns to, for example, the route creation method selection screen D4 in Fig. 18 to select the route generation mode again and regenerate a target route.

When the worker performs the registration operation, the operation control unit 21 registers the target route in association with the field F. For example, the operation control unit 21 registers the target route in association with a name of the field F. Furthermore, the operation control unit 21 may associate position information such as an own vehicle position of the work vehicle 10, and a start point, an end point, and a center point of the route with the target route as position information of the field F. Furthermore, the operation control unit 21 may register information of the route generation mode (the first route generation mode, the overlap mode, and the non-overlap mode) at the time of route generation in association with the target route.

Note that, although the straight route (target route) enables designation of an azimuth angle and makes it easy to generate a similar route again, the curved route (target route) makes it difficult to create a similar route again. Hence, in a case of the curved route, it is desirable to enable registration even when the field F that is a target to be associated cannot be specified. Hence, in a case where the target field F is not registered, the operation control unit 21 may register the target route of the curved route without associating the target route with the field F. For example, the operation control unit 21 creates a temporary field (empty field), and registers the target route in association with the empty field.

When the work vehicle 10 is caused to automatically travel according to the generated target route, the worker makes a work start instruction on the operation screen of the operation terminal 20. Thus, the vehicle control device 11 acquires the work start instruction from the operation terminal 20, and causes the work vehicle 10 to start automatic traveling.

As described above, the automatic traveling system 1 according to the present embodiment generates the target route for causing the work vehicle 10 to automatically travel on the field F (work area). Furthermore, the automatic traveling system 1 sets one of the first route generation mode of generating a target route based on the first reference line Ra that serves as the reference at the time of generating the target route, and the second route generation mode of generating the target route based on the first reference line Ra and the second reference line Rb having the shape or the azimuth different from those of the first reference line Ra.

Specifically, the automatic traveling system 1 sets the shapes or the azimuths of all routes included in the target route based on the shape or the azimuth of the first reference line Ra in the first route generation mode.

By contrast with this, in the second route generation mode, the automatic traveling system 1 sets the shape or the azimuth of the first route included in the target route based on the shape or the azimuth of the first reference line Ra, and sets the shape or the azimuth of the second route included in the target route based on the shape or the azimuth of the second reference line Rb. For example, the automatic traveling system 1 sets the shapes or the azimuths of the plurality of routes included in the target route so as to become closer to the shape or the azimuth of the second reference line Rb from the shape or the azimuth of the first reference line Ra toward the alignment direction of the plurality of routes.

According to the above configuration, when, for example, part of the outer shape of a work target field has a curved shape, it is possible to set a reference line (first reference line Ra) that goes along the curve, and generate the target route having the curved shape based on the reference line (first route generation mode). Furthermore, when work along a curve and work along a straight line need to be performed, it is possible to set a reference line (first reference line Ra) along the curve and a reference line (second reference line Rb) along the straight line, and generate a target route including a curved work route and a straight work route based on the two reference lines (second route generation mode). Furthermore, the worker can select one of the first route generation mode and the second route generation mode and generate the target route.

Accordingly, according to the above configuration, it is possible to easily generate the target route on which the work vehicle 10 is caused to automatically travel in a non-rectangular work area (field F).

### [Straight Route (Target Route) Generation Method]

The above-described embodiment has described the configuration of generating a target route including a curved work route. However, the present invention is not limited thereto, and a target route that does not include a curved work route and includes a straight work route may be generated.

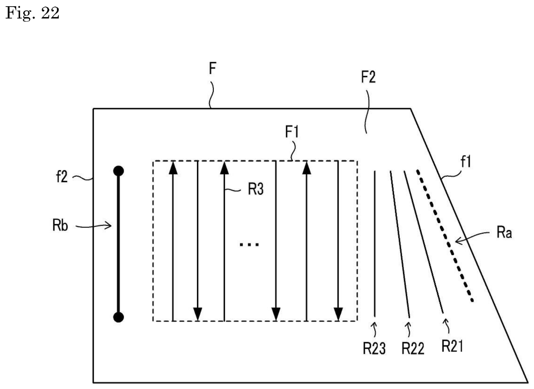

Fig. 22 illustrates an example of the field F each outer shape side of which is formed as a straight line. For example, the operation control unit 21 sets as the first reference line Ra a straight line parallel to an oblique side f1 of the field F, and sets as the second reference line Rb a straight line parallel to a side f2 facing the oblique side f1.

In this case, the operation control unit 21 sets one of the first route generation mode of generating a target route based on the first reference line Ra, and the second route generation mode of generating a target route based on the first reference line Ra and the second reference line Rb having the azimuth different from (non-parallel to) that of the first reference line Ra. Specifically, in the first route generation mode, the operation control unit 21 sets the azimuths of all work routes included in the target route based on the azimuth of the first reference line Ra. For example, the operation control unit 21 sets the azimuth of each of the plurality of work routes included in the target route to a state parallel to the first reference line Ra. Furthermore, the operation control unit 21 generates the target route such that all the work routes are parallel to the first reference line Ra.

By contrast with this, in the second route generation mode, the azimuth of the first work route included in the target route is set based on the azimuth of the first reference line Ra, and the azimuth of the second work route included in the target route is set based on the azimuth of the second reference line Rb. Specifically, the operation control unit 21 sets the azimuths of the plurality of work routes included in the target route so as to become closer to the state parallel to the second reference line Rb from the state parallel to the first reference line Ra toward the alignment direction of the plurality of work routes. That is, the operation control unit 21 sets the azimuths of the plurality of work routes included in the target route so as to become closer to the azimuth of the second reference line Rb from the azimuth of the first reference line Ra toward the alignment direction of the plurality of work routes. As illustrated in, for example, Fig. 22, the operation control unit 21 generates the target route such that the azimuth of a work route R21 is closer to the azimuth of the first reference line Ra and the azimuth of a work route R23 is closer to the azimuth of the second reference line Rb.

Note that the operation control unit 21 may generate the target route such that a work route R3 in an inner area F1 of the field F is parallel to the second reference line Rb.

Furthermore, in the second route generation mode, the operation control unit 21 may set the work route R3 in the inner area F1 as the second reference line Rb and generate the target route. That is, in the second route generation mode, the operation control unit 21 may generate the target route based on the outer shape side f1 of the field F and the work route R3, and generate the target route based on the outer shape sides f1 and f2 or the work route R3 of the field F in the first route generation mode.

Furthermore, the overlap mode and the non-overlap mode (see Fig. 18) may be also settable in the above configuration.

### [Another Generation Method of First Reference Line Ra]

The present invention is not limited to the above-described embodiment. Other embodiments of the present invention will be described below.

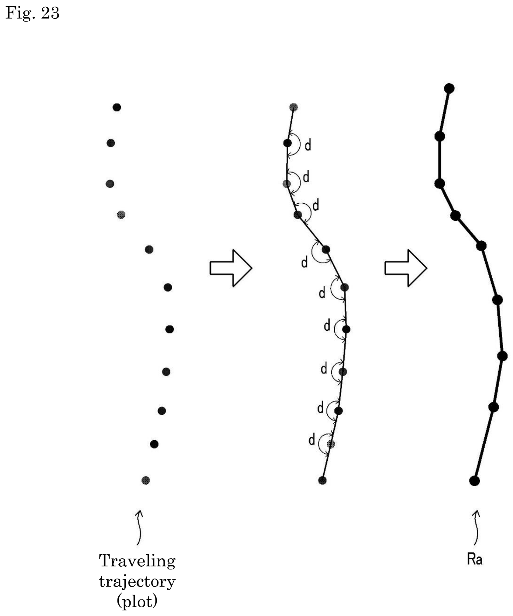

In the above-described embodiment, the operation control unit 21 sets the temporary reference line Re including the partial curve based on the position information of the traveling trajectory acquired at the time of registering the field, and sets the first reference line Ra by converting the partial curve of the temporary reference line Re into a partial straight line. In another embodiment, the operation control unit 21 may omit processing of setting the temporary reference line Re. Specifically, the operation control unit 21 may set the first reference line Ra including a plurality of partial straight lines (first partial straight lines) based on the position information of the traveling trajectory acquired at the time of registering the field. As illustrated in, for example, Fig. 23, the operation control unit 21 may set the first reference line Ra by repeating processing of connecting the respective positioning points by straight lines, replacing two straight lines with one straight line when an angle d formed by two neighboring straight lines is a predetermined angle or more, and leaving the two straight lines when the formed angle d is less than the predetermined angle. That is, the operation control unit 21 may set the first reference line Ra by integrating or dividing a plurality of partial straight lines (first partial straight lines) constituting the traveling trajectory of the work vehicle 10 acquired by a user's manual traveling operation at a time of registering the work area, according to azimuths of neighboring partial straight lines.

Furthermore, in another embodiment where the first reference line Ra is set, the operation control unit 21 may set the first reference line Ra based on a registered reference line connecting arbitrary points registered by the worker. For example, the worker performs a registration operation at a plurality of arbitrary positions while causing the work vehicle 10 to manually travel in the field F. When setting the registered reference line obtained by connecting the plurality of registered positions by a straight line, the operation control unit 21 sets the first reference line Ra based on the registered reference line. Consequently, when, for example, the worker registers points A, B, and C, the operation control unit 21 can generate a target route that supports turning work of a turning portion corresponding to the angle formed by the two straight lines by setting the first reference line Ra including the straight line connecting the point A and the point B and the straight line connecting the point B and the point C.

The first reference line Ra includes the plurality of straight lines (first partial straight lines) in the above-described embodiment. However, in another embodiment, the first reference line Ra may include straight lines and curves. In a case where the first reference line Ra includes a curve, the operation control unit 21 executes processing of individually translating the straight line (first partial straight line) and the curve by a predetermined distance, and correcting a curvature radius (turning radius) of the curve. When, for example, a curve that is included in the first reference line Ra and protrudes rightward is translated rightward, the operation control unit 21 corrects the curvature radius of the translated curve to a value larger than the curvature radius of the curve of the first reference line Ra. On the other hand, when the curve that is included in the first reference line Ra and protrudes leftward is translated rightward, the operation control unit 21 corrects the curvature radius of the translated curve to a value smaller than the curvature radius of the curve of the first reference line Ra. As described above, the first reference line Ra may include the curve.

### [Turning Route Correction Method]

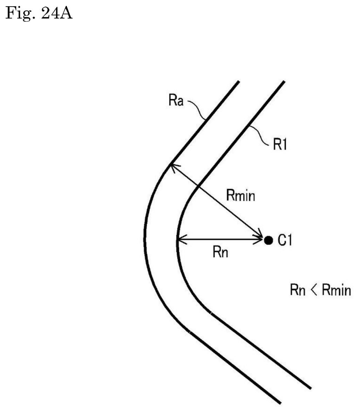

When the target route is generated based on the first reference line Ra in each of the above-described embodiments, the turning route included in the target route may be less than a minimum turning radius at which the work vehicle 10 can turn. Fig. 24A schematically illustrates the neighboring first reference line Ra and work route R1. Here, when the turning radius of the turning route included in the first reference line Ra is a minimum turning radius Rmin, a turning radius Rn of the turning route of the work route R1 may be a value smaller than the minimum turning radius Rmin (Rn < Rmin). In this case, there is a problem that the work vehicle 10 cannot turn and travel on the work route R1.

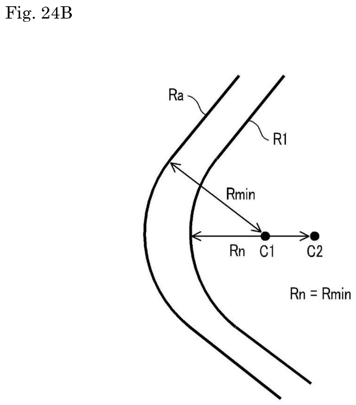

Hence, to solve the above problem, when two neighboring partial straight lines (second partial straight lines) are connected, and when the turning radius at a time of turning and traveling on the two partial straight lines is less than the minimum turning radius at which the work vehicle 10 can turn, the operation control unit 21 may move a turning center associated with the two neighboring partial straight lines. Specifically, as illustrated in Fig. 24B, the operation control unit 21 sets the turning radius Rn to the minimum turning radius Rmin (Rn = Rmin) for the turning route of the work route R1, and moves the turning center from a position C1 to a position C2. Note that the operation control unit 21 may set the turning center to a position at which the turning radius Rn is the minimum turning radius Rmin or more. As described above, when the turning radius Rn of the work vehicle 10 is less than the minimum turning radius Rmin, the operation control unit 21 executes the processing of correcting the turning route. Hereinafter, a specific example of the turning route correction method will be described.

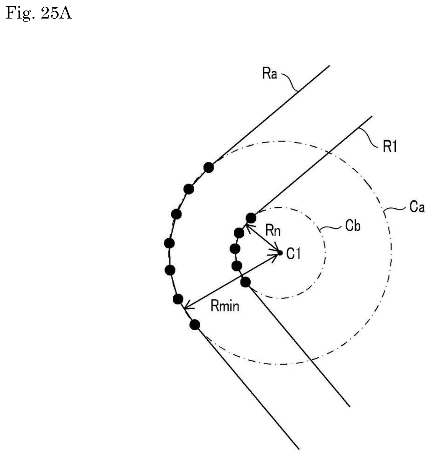

Fig. 25A illustrates the first reference line Ra, the pre-correction work route R1, and a connection point of a partial straight line at a turning portion of each route. First, the operation control unit 21 specifies a partial straight line whose turning route needs to be corrected.

For example, the operation control unit 21 creates complementary lines the number of which is obtained by dividing the turning angle by the first predetermined angle (e.g., three degrees) by the method (the method of converting a curve into a straight line) illustrated in Figs. 7A to 7C. In this case, the turning angle θ of the two straight lines is 4.5 degrees at the maximum. When, for example, the number of complementary lines is two and a remainder of the divided value is as close as possible to three degrees, the maximum turning angle θ is (3+2.999···/2) degrees. Hence, when the turning angle θ of the two straight lines is 4.5 degrees or more, the operation control unit 21 determines that the turning route including the two straight lines needs to be corrected.

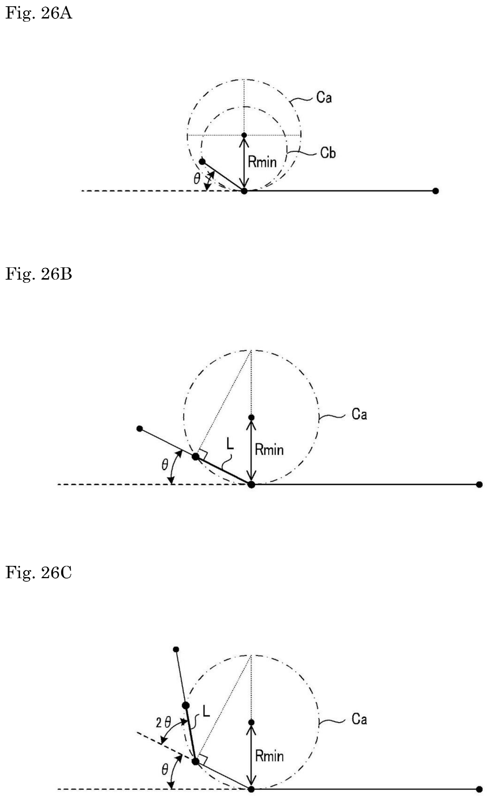

Another method assumes that, for example, as a result of conversion into the straight line illustrated in Figs. 7A to 7C, the end point of the straight line of the turning portion is present on a turning circle Cb as illustrated in Fig. 26A. Hence, when a circle Ca having the minimum turning radius Rmin is created and a next straight line is present on the inner side of the circle Ca, it is possible to determine that the circle Cb is smaller than the circle Ca having the minimum turning radius Rmin. Figs. 26B and 26C are schematic views in a case where a straight line is present on the circle Ca having the minimum turning radius Rmin. When an angular deviation between the two straight lines is less than three degrees, the operation control unit 21 calculates an azimuth deviation between the straight lines as θ (see Fig. 26B), and, when the angular deviation between the two straight lines is three degrees or more, the operation control unit 21 calculates an azimuth deviation between the straight lines as 2θ (see Fig. 26C). Specifically, the operation control unit 21 obtains a minimum length L of the straight line of the turning portion according to the following equation.$L = 2 Rmin ⋅ cos \left(90-\left|θ\right|\right) L = 2 Rmin ⋅ sin \left(\left|θ\right|\right)$

Thus, when a length S of the target straight line (the partial straight line of the turning route) is smaller than the minimum length L (S < L), the operation control unit 21 determines that the turning route including the straight line needs to be corrected.

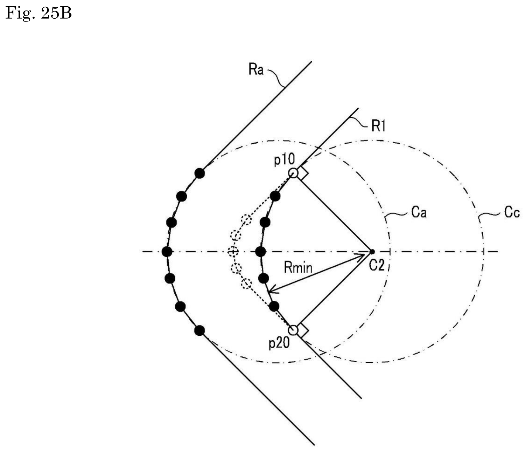

In an example illustrated in Fig. 25A, the operation control unit 21 specifies the partial straight line on the circle Cb of the turning radius Rn smaller than the minimum turning radius Rmin as a partial straight line that needs to be corrected. When specifying the partial straight line whose turning route needs to be corrected by the above method, the operation control unit 21 subsequently obtains a circle Cc having the minimum turning radius Rmin in internal contact with the two partial straight lines before and after the turning route (see Fig. 25B). Furthermore, the operation control unit 21 sets a turning start point p10 and a turning end point p20 on the obtained circle Cc, and generates a turning route from the turning start point p10 to the turning end point p20. Specifically, the operation control unit 21 specifies the circle Cc having the minimum turning radius Rmin among circles in internal contact with each of the two partial straight lines, and sets the connection points (the turning start point p10 and the turning end point p20) of the two partial straight lines on an arc of the specified circle Cc. Note that the operation control unit 21 generates the turning route as a plurality of partial straight lines.

As described above, when the turning route included in the generated target route is less than the minimum turning radius, the operation control unit 21 corrects the turning radius associated with the turning route. Consequently, it is possible to solve the problem that the work vehicle 10 cannot turn on the work route R1.

Note that, when the turning radius is corrected, a gap may be produced between worked areas corresponding to neighboring turning routes. Hence, the operation control unit 21 may notify the worker of production of a gap between the worked areas, or may inquire of the worker whether or not to permit production of the gap.

### [Reference Curve (First Reference Line Ra) Generation Procedure]

An example of the procedure of generating the first reference line Ra will be described. Hereinafter, the example of the procedure of generating the first reference line Ra based on positioning points (measurement points) acquired by teaching traveling will be described.

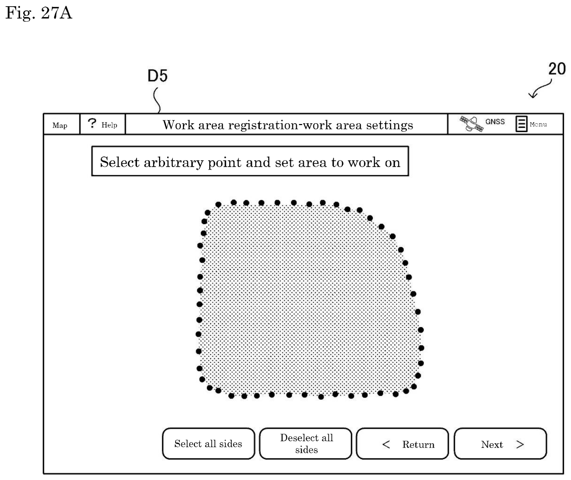

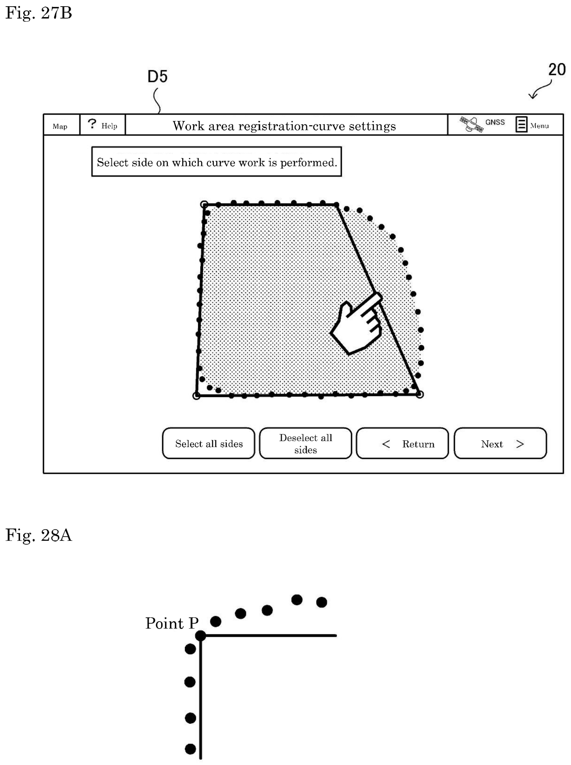

Fig. 27A illustrates a work area registration screen D5 for registering a work area. When, for example the worker selects "WORK AREA REGISTRATION" on the menu screen D1 (see Fig. 5) and selects a target field after registration of the field based on the measurement points is completed, the operation control unit 21 displays the work area registration screen D5 illustrated in Fig. 27A. On the work area registration screen D5, the worker performs an operation of setting the work area. For example, the worker selects vertices that are corner parts of the outer shape side of the work area among the measurement points. Note that the worker may select the measurement points located at the corner parts, or may select the outer side of the measurement points located at the corner parts. When the worker selects the outer side of the measurement points, the operation control unit 21 sets a complementary point that is an end point of the outer shape side. Fig. 27B illustrates a state where the worker selects four points on the work area registration screen D5.

The operation control unit 21 sets and displays straight lines (sides) connecting the points selected by the worker. Furthermore, in the work area registration screen D5 illustrated in Fig. 27B, the operation control unit 21 accepts an operation of selecting a side on which curve work is performed among the set sides. When there is a side for which the curve work is desired among the sides, the worker selects the side (taps the side on the screen (see Fig. 27B)), and, when there is no side for which the curve work is desired (when the entire area is subjected to linear work), the worker selects "NEXT". When the worker selects a right side for which the curve work is desired (see Fig. 27B), the operation control unit 21 generates a curved traveling trajectory (reference curve) based on the measurement point corresponding to the right side (the measurement point between a right end point of an upper side and a right end point of a lower side).

Here, a method for determining a measurement point corresponding to the selected side (a measurement point that is an end point of a curve) will be described. For example, the operation control unit 21 specifies points P corresponding to the end points of the selected side by the following procedure, and generates a curve based on measurement points between the points P.

### (Procedure 1)

In procedure 1, as illustrated in Fig. 28A, the operation control unit 21 determines whether or not the vertex (selected point) of the work area is included in the traveling trajectory (measurement point). When the vertex of the work area is included in the traveling trajectory, the operation control unit 21 sets the point P at the position of the vertex, and, when the vertex of the work area is not included in the traveling trajectory, the procedure proceeds to procedure 2.

### (Procedure 2)

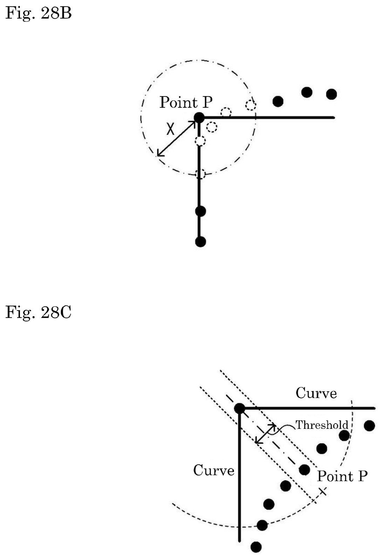

In procedure 2, as illustrated in Fig. 28B, the operation control unit 21 determines whether or not the traveling trajectory is included in the range of the predetermined distance X(m) from the vertex (complementary point) of the work area. When the traveling trajectory is included in the range of the predetermined distance X from the vertex of the work area, the operation control unit 21 deletes the traveling trajectory in the range and sets the points P to the deleted position. When the traveling trajectory is not included in the range of the predetermined distance X from the vertex of the work area, the operation control unit 21 proceeds to procedure 3.

### (Procedure 3)

In procedure 3, as illustrated in Fig. 28C, in the case of the vertex between the curved sides, the operation control unit 21 sets as the point P the closest point within a range of (minimum length of side from vertex)/2 and within a range of (threshold)/2 from a bisector of the side. Note that the threshold used for making determination on omission of measurement points is set to, for example, 0.1 m. When the distance between the measurement points is the threshold or less, the operation control unit 21 omits the points. When no point satisfying the condition is found, since it is assumed that a start point and an end point are apart from each other, the operation control unit 21 sets the start point as the point P.

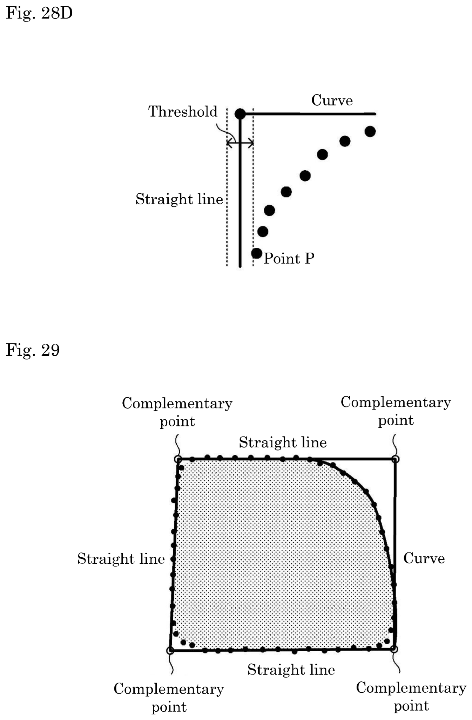

Furthermore, in procedure 3, as illustrated in Fig. 28D, in a case of the vertex between the curved side and the straight side, the operation control unit 21 sets as the point P a point found first in the range of (threshold)/2 from the straight side. According to this method, it is possible to support the curved traveling trajectory illustrated in Fig. 29.

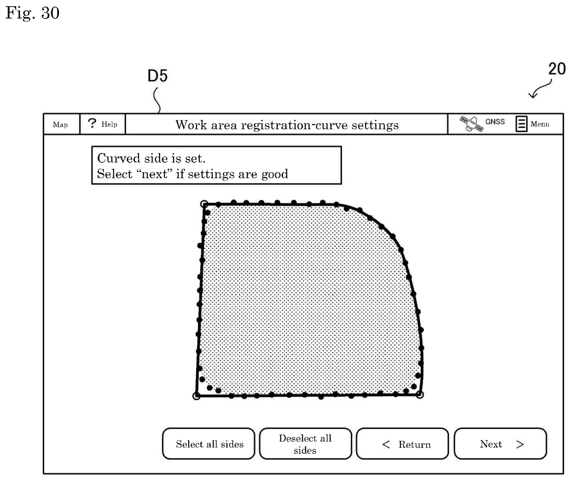

As described above, the operation control unit 21 specifies the points P (both end points), and generates a curved route of one side based on the traveling trajectory (measurement point) between the points P. When generating the curved route, the operation control unit 21 replaces the selected side (see Fig. 27B) with a curve and displays the curve as illustrated in Fig. 30.

Note that the operation control unit 21 can generate the one curved route based on a partial straight line connecting a plurality of measurement points located between points P1 by the method described in the above-described embodiment (Figs. 6 to 10). That is, the curved route is generated by connecting straight routes having a predetermined length. Furthermore, the operation control unit 21 may set the curved route as the first reference line Ra.

Next, another method for generating the first reference line Ra will be described. Specifically, the operation control unit 21 generates the first reference line Ra based on at least one condition of a route length, an azimuth deviation between neighboring routes, and the deviation (distance) between the measurement point and the route. For example, the operation control unit 21 generates a partial straight line such that the route length is a first predetermined length (e.g., one m) or more (first condition). Furthermore, the operation control unit 21 generates a partial straight line such that the route length is less than a second predetermined length (e.g., five m) (second condition). Furthermore, the operation control unit 21 generates a partial straight line such that the azimuth deviation between the neighboring routes is less than three degrees (the angle formed between the neighboring routes is 177 degrees or more) (third condition). Furthermore, the operation control unit 21 generates a partial straight line such that the deviation between the measurement point and the route is less than 10 cm (fourth condition).

The operation control unit 21 may generate the first reference line Ra by setting priorities of the above-described first to fourth conditions. For example, the operation control unit 21 may set a first priority to the first condition and set a second priority to the second condition to the fourth condition.

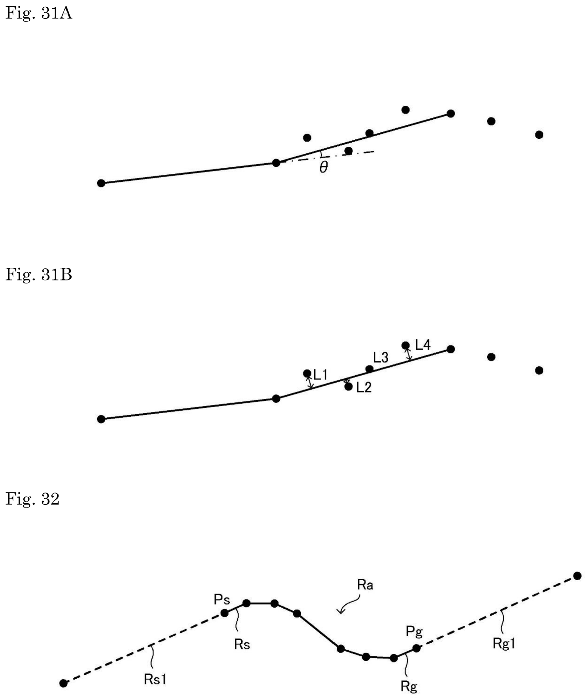

Fig. 31A illustrates an example of a partial straight line that satisfies the first condition, the second condition, and the third condition. θ in Fig. 31A represents an azimuth deviation between neighboring routes. Fig. 31B illustrates an example of a partial straight line that satisfies the first condition, the second condition, and the fourth condition. L1 to L4 in Fig. 31B each represent a deviation between a measurement point and a route.

Note that, in a case where the priority is set to the condition, a route that does not satisfy a condition of a lower priority may be generated. To prevent generation of such an unexpected route, the operation control unit 21 may set an error determination condition for setting an unallowable route as an error. As, for example, the error determination condition, "an azimuth deviation between neighboring routes is 10 degrees or more (an angle formed between neighboring routes is less than 170 degrees)", "a deviation between a measurement point and a route is 30 cm or more ", or the like is set. When the error determination condition is satisfied and an error is determined, the operation control unit 21 interrupts generation of the curved route and displays a route generation error screen (not illustrated).

Furthermore, when the worker permits the route determined as an error on the route generation error screen, the operation control unit 21 may set the route as the curved route (first reference line Ra).

Furthermore, when the worker makes a route correction instruction on the route generation error screen, the operation control unit 21 may correct the route to a route that does not satisfy the error determination condition and regenerate a curved route. Note that the worker may be able to set in advance on the setting screen whether or not to execute the route correction processing when the route generation error occurs.

Furthermore, when the route is corrected, the operation control unit 21 may display a pre-correction route and a post-correction route side by side to accept a worker's selection operation, and set the selected route as the curved route (first reference line Ra).

When generating a target route of a curved route in a headland area, the operation control unit 21 generates the target route based on the curved route (first reference line Ra) in the headland area of a side (see Fig. 27B) selected by the worker. Specifically, the operation control unit 21 accepts, from the worker, a field selection operation, a work area selection operation, a work vehicle selection operation, a work machine selection operation, a work setting operation in the headland area, a route generation mode (first route generation mode or second route generation mode (overlap mode or non-overlap mode)) selection operation (see Fig. 18), a turning method setting operation, and the like, and generates a curved route (target route) of the headland area based on information associated with each operation.

### [Extension of First Reference Line Ra]

The operation control unit 21 may extend the generated first reference line Ra (curved route). Specifically, the operation control unit 21 generates a straight line (extension line) obtained by extending toward the outer side a first straight route (partial straight line) and a last straight route (partial straight line) constituting the first reference line Ra. The length of the extension line is set to, for example, one km. Furthermore, the operation control unit 21 may identifiably display an extended portion (extension line). By extending the route, for example, it is possible to cause the work vehicle 10 to automatically travel to a field boundary (furrow edge).

Fig. 32 illustrates an example of a route obtained by extending the first reference line Ra. For example, the operation control unit 21 sets an extension line Rs1 obtained by extending a first straight route Rs and an extension line Rg1 obtained by extending a last straight route Rg in the curved route (first reference line Ra) from a start point Ps (a start point of the first straight route Rs constituting the curved route (first reference line Ra)) to an end point Pg (an end point of the last straight route Rg constituting the curved route).

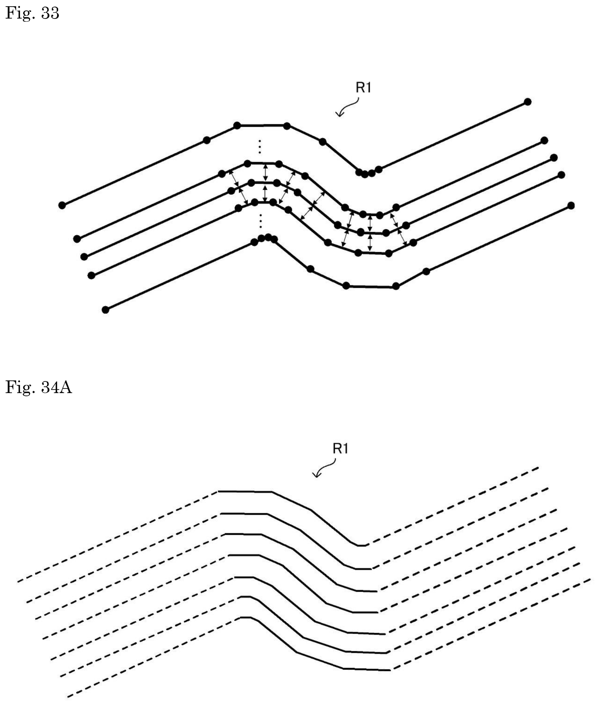

Furthermore, as illustrated in Fig. 33, the operation control unit 21 duplicates the generated curved route (first reference line Ra) in a left-right direction to generate the work route R1. At this time, an extended route (extension line) may be excluded from duplication targets. Specifically, similarly to the method illustrated in Figs. 10A to 10C, the operation control unit 21 duplicates each of the straight routes (partial straight lines) constituting the curved route by translating each of the straight routes at equal intervals in a vertical direction. Note that a distance for translation is set based on setting information (e.g., the work width, the overlap width, and the like) of the work machine 14. After duplicating (translating) the curved route, the operation control unit 21 may execute the above-described route extension process (see Fig. 32) for each duplicated curved route. Note that the number of routes to be duplicated may be able to be set by the worker. When, for example, the worker designates 10 curved routes, the operation control unit 21 duplicates a total of 20 curved routes of 10 curved routes on the left side and 10 curved routes on the right side of the first reference line Ra.

Furthermore, as illustrated in Fig. 34A, the operation control unit 21 may extend the work route R1 duplicated (generated) based on the first reference line Ra, and cause the operation screen to display the extended work route R1. Note that, although each work route R1 includes a plurality of straight routes (partial straight lines), the operation control unit 21 displays the work route R1 as one curved route on the operation screen. Furthermore, the operation control unit 21 may identifiably display the extension line, may omit display of the extension line, or may switch between display and hide of the extension line according to a worker's operation. Fig. 34A illustrates the extension lines by dotted lines.

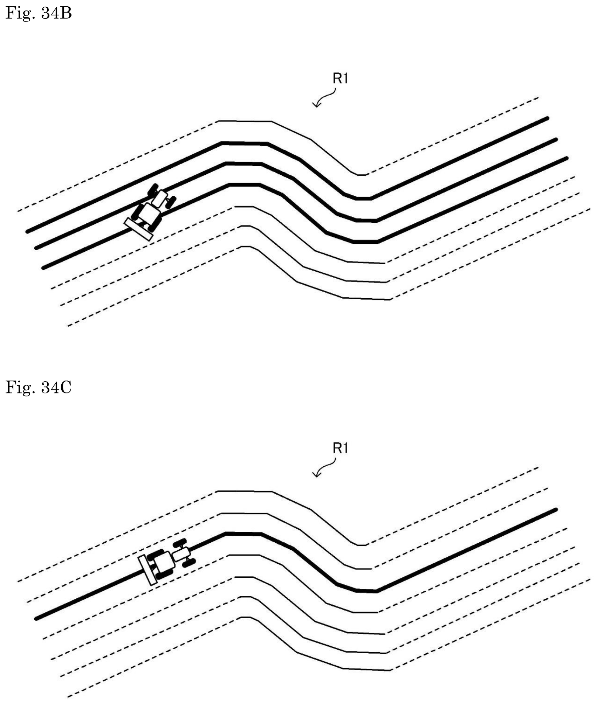

Furthermore, the operation control unit 21 may search (path search) for the work route R1 on which automatic traveling can be started, and identifiably display the searched work route R1. Specifically, the operation control unit 21 searches for the one or plurality of work routes R1 included in a range in a predetermined direction from the current position of the work vehicle 10, and highlights the work route R1 included in the range. Fig. 34B illustrates that the three work routes R1 included in the range are highlighted on the operation screen.

Furthermore, as illustrated in Fig. 34C, when the one work route R1 that is an automatic traveling route target is determined, the operation control unit 21 may highlight the work route R1. Furthermore, the operation control unit 21 may highlight the one work route R1 during automatic traveling.

### [Method for Displaying Work Route R1]

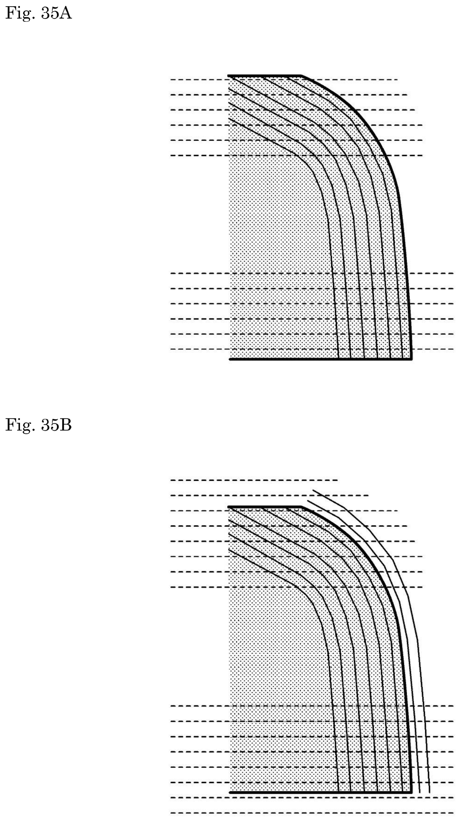

The operation control unit 21 may cause the operation screen to display the work route R1 (target route) in accordance with the outer shape side of the field F. As illustrated in, for example, Fig. 35A, the operation control unit 21 may be configured to display each work route R1 as one curved route, and display each work route R1 only on the inner side of the field F and not display each work route R1 on the outer side of the field F. Specifically, as illustrated in Fig. 35A, the operation control unit 21 does not display portions on a starting end side and a terminating end side located outside the field F in each work route R1 (see Fig. 34A) including the extension line, and displays only a portion located in the field F. Note that the operation control unit 21 may extend the straight route to the outside of the field F to display (routes indicated by dotted lines in Fig. 35A).

Furthermore, as illustrated in Fig. 35B, the operation control unit 21 may display a predetermined number of the work routes R1 in the headland area, and display part of the work routes R1 outside the field F. For example, the operation control unit 21 displays the eight work routes R1 in the headland area, displays the six work routes R1 of the eight work routes R1 in the field F, and displays the remaining two work routes R1 outside the field F. Note that the operation control unit 21 may display the work routes R1 the number of which is set by the worker inside and outside the field F.

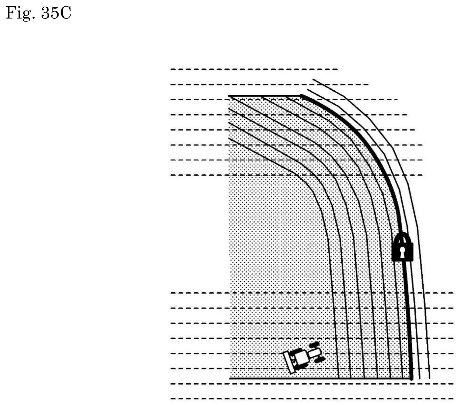

Furthermore, as illustrated in Fig. 35C, the operation control unit 21 may be capable of locking the curved side (first reference line Ra) of the outer shape side of the field F (fixing the curved side to an automatic traveling start target route). Fig. 35C illustrates a state where the curved side is locked. When, for example, the worker taps the curved side on the operation screen, the operation control unit 21 locks the curved side. Furthermore, when, for example, the worker taps a lock icon on the operation screen in a state where the work vehicle 10 faces the same or closer azimuth as or to the azimuth of the curved work route R1, the operation control unit 21 may lock the curved side. In another embodiment, when none of the sides is locked, the operation control unit 21 may identifiably display (highlight) a route of a side close to the current azimuth of the work vehicle 10.

In each of the above-described embodiments, the automatic traveling system 1 corresponds to the route generation system according to the present invention. However, the route generation system according to the present invention may be configured with the operation terminal 20 alone, may be configured by combining the work vehicle 10 and the operation terminal 20, or may be configured by a server (not illustrated) alone.

### [Additional Note of Invention]

Hereinafter, an outline of the invention extracted from each of the above-described embodiments will be additionally described. Note that configurations and processing functions described in the following additional notes can be selected and freely combined.

### <Additional Note 1>

A route generation method for generating a target route on which a work vehicle is caused to automatically travel in a work area includes, at one or a plurality of processors, setting one of a first route generation mode of generating the target route based on a first reference line that serves as a reference at a time of generating the target route, and a second route generation mode of generating the target route based on the first reference line and a second reference line having a different shape or azimuth from a shape or an azimuth of the first reference line.

### <Additional Note 2>

According to the route generation method described in additional note 1, in the first route generation mode, shapes or azimuths of all routes included in the target route are set based on the shape or the azimuth of the first reference line, and
in the second route generation mode, a shape or an azimuth of a first route included in the target route is set based on the shape or the azimuth of the first reference line, and a shape or an azimuth of a second route included in the target route is set based on a shape or an azimuth of the second reference line.

### <Additional Note 3>

According to the route generation method described in additional note 1 or 2, in the second route generation mode, shapes or azimuths of a plurality of routes included in the target route are set so as to become closer to the shape or the azimuth of the second reference line from the shape or the azimuth of the first reference line toward an alignment direction of the plurality of routes.

### <Additional Note 4>

The route generation method described in any one of additional notes 1 to 3 further includes displaying a selection screen that enables selection of one of the first route generation mode and the second route generation mode.

### <Additional Note 5>

According to the route generation method described in any one of additional notes 1 to 4, the second route generation mode includes an overlap mode of generating the target route by overlapping part of work widths of neighboring routes included in the target route, and a non-overlap mode of generating the target route without overlapping the work widths of the neighboring routes included in the target route.

### <Additional Note 6>

The route generation method described in additional note 5 further includes displaying a selection screen that enables selection of one of the first route generation mode, the overlap mode, and the non-overlap mode.

### <Additional Note 7>

The route generation method described in additional note 6 further includes causing the selection screen to identifiably display a mode matching a work machine or work contents among the first route generation mode, the overlap mode, and the non-overlap mode.

### <Additional Note 8>

The route generation method described in any one of additional notes 1 to 7 further includes displaying a selection screen that enables selection of a curve mode of generating the target route based on the first reference line including a curved portion, and a straight line mode of generating the target route based on the first reference line of a straight line that does not include the curved portion.

### <Additional Note 9>

According to the route generation method described in additional note 8, in the curve mode and the second route generation mode, shapes of a plurality of routes included in the target route are set so as to become closer to a straight line from a curve or to a curve from a straight line toward an alignment direction of the plurality of routes, and
in the curve mode and the first route generation mode, the shapes of the plurality of routes included in the target route are set to curved shapes.

### <Additional Note 10>

According to the route generation method described in additional note 8 or 9, in the straight line mode and the second route generation mode, azimuths of a plurality of routes included in the target route are set so as to become closer to a state parallel to the second reference line from a state parallel to the first reference line toward an alignment direction of the plurality of routes, and
in the straight line mode and the first route generation mode, the azimuths of the plurality of routes included in the target route are set to the state parallel to the first reference line.

### <Additional Note 11>

A route generation program of generating a target route on which a work vehicle is caused to automatically travel in a work area causes one or a plurality of processors to set one of a first route generation mode of generating the target route based on a first reference line that serves as a reference at a time of generating the target route, and a second route generation mode of generating the target route based on the first reference line and a second reference line having a different shape or azimuth from a shape or an azimuth of the first reference line.

### <Additional Note 12>

A route generation system that generates a target route on which a work vehicle is caused to automatically travel in a work area sets one of a first route generation mode of generating the target route based on a first reference line that serves as a reference at a time of generating the target route, and a second route generation mode of generating the target route based on the first reference line and a second reference line having a different shape or azimuth from a shape or an azimuth of the first reference line.

### LIST OF REFERENCE SIGNS

- 1: Automatic traveling system
- 10: Work vehicle
- 11: Vehicle control device
- 14: Work machine
- 16: Positioning unit
- 20: Operation terminal
- 21: Operation control unit
- 111: Travel processing unit
- 211: Registration processing unit
- 212: Setting processing unit
- 213: Generation processing unit
- 214: Output processing unit
- F: Field (work area)
- R1: Work route (target route)
- Ra: First reference line
- Rb: Second reference line
- D1: Menu screen
- D2: Reference line selection screen
- D3: Work machine selection screen
- D4: Route creation method selection screen
- D41: Route creation method selection screen
- D42: Route creation method selection screen
- D5: Work area registration screen

## Claims

1. A route generation method for generating a target route on which a work vehicle is caused to automatically travel in a work area, the route generation method comprising setting one of a first route generation mode of generating the target route based on a first reference line that serves as a reference at a time of generating the target route, and a second route generation mode of generating the target route based on the first reference line and a second reference line having a different shape or azimuth from a shape or an azimuth of the first reference line.

2. The route generation method according to claim 1, wherein
in the first route generation mode, shapes or azimuths of all routes included in the target route are set based on the shape or the azimuth of the first reference line, and
in the second route generation mode, a shape or an azimuth of a first route included in the target route is set based on the shape or the azimuth of the first reference line, and a shape or an azimuth of a second route included in the target route is set based on a shape or an azimuth of the second reference line.

3. The route generation method according to claim 1, wherein, in the second route generation mode, shapes or azimuths of a plurality of routes included in the target route are set so as to become closer to the shape or the azimuth of the second reference line from the shape or the azimuth of the first reference line toward an alignment direction of the plurality of routes.

4. The route generation method according to claim 1, further comprising displaying a selection screen that enables selection of one of the first route generation mode and the second route generation mode.

5. The route generation method according to claim 1, wherein the second route generation mode includes an overlap mode of generating the target route by overlapping part of work widths of neighboring routes included in the target route, and a non-overlap mode of generating the target route without overlapping the work widths of the neighboring routes included in the target route.

6. The route generation method according to claim 5, further comprising displaying a selection screen that enables selection of one of the first route generation mode, the overlap mode, and the non-overlap mode.

7. The route generation method according to claim 6, further comprising causing the selection screen to identifiably display a mode matching a work machine or work contents among the first route generation mode, the overlap mode, and the non-overlap mode.

8. The route generation method according to claim 1, further comprising displaying a selection screen that enables selection of a curve mode of generating the target route based on the first reference line including a curved portion, and a straight line mode of generating the target route based on the first reference line of a straight line that does not include the curved portion.

9. The route generation method according to claim 8, wherein
in the curve mode and the second route generation mode, shapes of a plurality of routes included in the target route are set so as to become closer to a straight line from a curve or to a curve from a straight line toward an alignment direction of the plurality of routes, and
in the curve mode and the first route generation mode, the shapes of the plurality of routes included in the target route are set to curved shapes.

10. The route generation method according to claim 8, wherein
in the straight line mode and the second route generation mode, azimuths of a plurality of routes included in the target route are set so as to become closer to a state parallel to the second reference line from a state parallel to the first reference line toward an alignment direction of the plurality of routes, and
in the straight line mode and the first route generation mode, the azimuths of the plurality of routes included in the target route are set to the state parallel to the first reference line.

11. A route generation program of generating a target route on which a work vehicle is caused to automatically travel in a work area, the route generation program causing one or a plurality of processors to set one of a first route generation mode of generating the target route based on a first reference line that serves as a reference at a time of generating the target route, and a second route generation mode of generating the target route based on the first reference line and a second reference line having a different shape or azimuth from a shape or an azimuth of the first reference line.

12. A route generation system that generates a target route on which a work vehicle is caused to automatically travel in a work area, wherein the route generation system sets one of a first route generation mode of generating the target route based on a first reference line that serves as a reference at a time of generating the target route, and a second route generation mode of generating the target route based on the first reference line and a second reference line having a different shape or azimuth from a shape or an azimuth of the first reference line.
